(19) Europäisches Patentamt / European Patent Office / Office européen des brevets

(11) **EP 3 301 988 B1**

(12) **EUROPEAN PATENT SPECIFICATION**

(45) Date of publication and mention
of the grant of the patent:
**01.05.2019 Bulletin 2019/18**

(51) Int Cl.:
***H04W 72/12*** *(2009.01)*   ***H04W 88/06*** *(2009.01)*

(21) Application number: **16191440.3**

(22) Date of filing: **29.09.2016**

(54) **MOBILE COMMUNICATION DEVICES AND METHODS IN MOBILE COMMUNICATION**

MOBILE KOMMUNIKATIONSGERÄTE UND VERFAHREN DER MOBILKOMMUNIKATION

DISPOSITIFS ET PROCÉDÉ DE COMMUNICATION MOBILE DANS LES COMMUNICATIONS MOBILES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.04.2018 Bulletin 2018/14**

(73) Proprietor: **Intel IP Corporation
Santa Clara, CA 95054 (US)**

(72) Inventor: **BUTHLER, Jakob
9000 Aalborg, 81 (DK)**

(74) Representative: **Viering, Jentschura & Partner mbB
Patent- und Rechtsanwälte
Am Brauhaus 8
01099 Dresden (DE)**

(56) References cited:
**EP-A1- 3 038 284        WO-A1-2012/035144
WO-A1-2015/199929**

## Description

### Technical Field

Various aspects of this disclosure relate generally to mobile communication devices and methods in mobile communication.

### Background

Mobile phone designs that incorporate multiple Subscriber Identity Modules (SIMs) have recently increased in popularity. There exist numerous variations of such multi-SIM designs, which each may allow for different degrees of operation for each included SIM. For example, straightforward designs such as Dual-Sim Dual-Standby (DSDS) designs may allow for one SIM to transmit and/or receive while the other SIM remains in standby mode. More complex designs including Dual-Receive Dual-SIM Dual-Standby (DR-DSDS) designs may allow for two SIMs to concurrently receive but only transmit on a time-sharing basis while Dual-Sim Dual-Active (DSDA) designs may allow two SIMs to simultaneously transmit and receive in parallel.

There may exist certain performance degradation in multi-SIM designs due to the presence of multiple SIMs. As previously indicated, DSDS designs may only allow active operation of one SIM at a time, while the other SIM is relegated to a passive "standby" role. Accordingly, both reception and transmission resources must be shared on a time-sharing basis, which may lead to missed transmissions and receptions for one or both SIMs. DR-DSDS designs may similarly suffer in the uplink direction due to the sharing of transmission resources between both SIMs. Furthermore, receiver desensitization in DSDA designs may occur when one SIM is transmitting simultaneous to reception activity by the other SIM.

Similar co-existence problems may arise in mobile devices that support multiple radio access technologies, such as mobile devices that support traditional cellular communications in addition to e.g. Bluetooth and/or WiFi. Reception and transmission conflicts may also be prevalent in such designs, e.g. where one radio access technology introduces interferences on another radio access technology or where multiple radio access technologies share transceiver resources.

A method for transmitting a plurality of packets is known in at least EP 3 038 284 A1 (Buthler, et al.), said method comprising determining information indicating a time characteristic of a pre-defined received signal of a subscriber of a mobile device; comparing the time characteristic against one or more predetermined interference signal time characteristics to generate a comparison result; and executing one or more actions based on the comparison result.

### Brief Description of the Drawings

In the drawings, like reference characters generally refer to the same parts throughout the different views. The drawings are not necessarily to scale, emphasis instead generally being placed upon illustrating the principles of the invention. In the following description, various aspects of this disclosure are described with reference to the following drawings, in which:

FIG. **1** shows a communication system according to a mobile communication standard;
FIG. **2** shows a radio cell arrangement;
FIG. **3** shows a high level architecture of a communication terminal for a DSDS system;
FIG. **4** shows a (first) timing chart illustrating missed subframes in multi-SIM context;
FIG. **5** is a time-line diagram illustrating the content of a buffer which contains a history of the UE subframe status reports received on an active connection

FIG. **6** is a diagram illustrating a Markov process for each subframe within the window $N_{dp}$ with system states $S_0^k$ based on multiple DRX periods.
FIG **7** illustrates how the algorithm assigns the output probability to each future subframe;
FIG. **8** shows a flowchart according to an aspect of this disclosure;
FIG **9** is a schematic diagram illustrating data distribution for a high MCS data channel with three CBs being carried by two RBs;
FIG **10** is a schematic diagram illustrating data distribution for a low MCS data channel with one CBs being carried by one RB;
FIG **11** shows the flowchart of the time prolonging Multi-SIM algorithm;
FIG. **12** shows an exemplary mobile radio communication device; and
FIG. **13** shows a block diagram illustrating an internal configuration of mobile terminal according to an aspect of the

**EP 3 301 988 B1**

disclosure.

## Description

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

The words "plural" and "multiple" in the description and the claims, if any, are used to expressly refer to a quantity greater than one. Accordingly, any phrases explicitly invoking the aforementioned words (e.g. "a plurality of [objects]", "multiple [objects]") referring to a quantity of objects is intended to expressly refer more than one of the said objects. The terms "group", "set", "collection", "series", "sequence", "grouping", "selection", etc., and the like in the description and in the claims, if any, are used to refer to a quantity equal to or greater than one, i.e. one or more. Accordingly, the phrases "a group of [objects]", "a set of [objects]", "a collection of [objects]", "a series of [objects]", "a sequence of [objects]", "a grouping of [objects]", "a selection of [objects]", "[object] group", "[object] set", "[object] collection", "[object] series", "[object] sequence", "[object] grouping", "[object] selection", etc., used herein in relation to a quantity of objects is intended to refer to a quantity of one or more of said objects. It is appreciated that unless directly referred to with an explicitly stated plural quantity (e.g. "two [objects]" "three of the [objects]", "ten or more [objects]", "at least four [objects]", etc.) or express use of the words "plural", "multiple", or similar phrases, references to quantities of objects are intended to refer to one or more of said objects.

As used herein, a "circuit" may be understood as any kind of logic (analog or digital) implementing entity, which may be special purpose circuitry or a processor executing software stored in a memory, firmware, hardware, or any combination thereof. Furthermore, a "circuit" may be a hard-wired logic circuit or a programmable logic circuit such as a programmable processor, for example a microprocessor (for example a Complex Instruction Set Computer (CISC) processor or a Reduced Instruction Set Computer (RISC) processor). A "circuit" may also be a processor executing software, for example any kind of computer program, for example a computer program using a virtual machine code such as for example Java. Any other kind of implementation of the respective functions which will be described in more detail below may also be understood as a "circuit". It is understood that any two (or more) of the described circuits may be combined into a single circuit with substantially equivalent functionality, and conversely that any single described circuit may be distributed into two (or more) separate circuits with substantially equivalent functionality. For example with respect to the use of "circuitry" in the claims included herein, the use of "circuit" may be understood as collectively referring to two or more circuits.

A "processing circuit" (or equivalently "processing circuitry") as used herein is understood as referring to any circuit that performs an operation(s) on signal(s), such as e.g. any circuit that performs processing on an electrical signal or an optical signal. A processing circuit may thus refer to any analog or digital circuitry that alters a characteristic or property of an electrical or optical signal, which may include analog and/or digital data. A processing circuit may thus refer to an analog circuit (explicitly referred to as "analog processing circuit(ry)"), digital circuit (explicitly referred to as "digital processing circuit(ry)"), logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Accordingly, a processing circuit may refer to a circuit that performs processing on an electrical or optical signal as hardware or as software, such as software executed on hardware (e.g. a processor or microprocessor). As utilized herein, "digital processing circuit(ry)" may refer to a circuit implemented using digital logic that performs processing on a signal, e.g. an electrical or optical signal, which may include logic circuit(s), processor(s), scalar processor(s), vector processor(s), microprocessor(s), controller(s), microcontroller(s), Central Processing Unit(s) (CPU), Graphics Processing Unit(s) (GPU), Digital Signal Processor(s) (DSP), Field Programmable Gate Array(s) (FPGA), integrated circuit(s), Application Specific Integrated Circuit(s) (ASIC), or any combination thereof. Furthermore, it is understood that a single a processing circuit may be equivalently split into two separate processing circuits, and conversely that two separate processing circuits may be combined into a single equivalent processing circuit.

As used herein, "memory" may be understood as an electrical component in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, etc., or any combination thereof. Furthermore, it is appreciated that registers, shift registers, processor registers, data buffers, etc., are also embraced herein by the "term" memory. It is appreciated that a single component referred to as "memory" or "a memory" may be composed of more than one different type of memory, and thus may refer to a collective component including one or more types of memory. It is readily understood that any single memory "component" may be distributed or/separated multiple substantially equivalent memory compo-

3

nents, and vice versa. Furthermore, it is appreciated that while "memory" may be depicted, such as in the drawings, as separate from one or more other components, it is understood that memory may be integrated within another component, such as on a common integrated chip.

The term "base station" used in reference to an access point of a mobile communication network may be understood as a macro base station, micro base station, NodeB, evolved NodeBs (eNB), Home eNodeB, Remote Radio Head (RRH), relay point, etc.

As used herein, a "cell" in the context of telecommunications may be understood as a sector served by a base station. Accordingly, a cell may be a set of geographically co-located antennas that correspond to a particular sectorization of a base station. A base station may thus serve one or more "cells" (or sectors), where each cell is characterized by a distinct communication channel. Furthermore, the term "cell" may be utilized to refer to any of a macrocell, microcell, femtocell, picocell, etc.

It is appreciated that the ensuing description may detail exemplary scenarios involving mobile device operating according to certain 3GPP (Third Generation Partnership Project) specifications, notably Long Term Evolution (LTE) and Long Term Evolution-Advanced (LTE-A). It is understood that such exemplary scenarios are demonstrative in nature, and accordingly may be similarly applied to other mobile communication technologies and standards, such as WLAN (wireless local area network), WiFi, UMTS (Universal Mobile Telecommunications System), GSM (Global System for Mobile Communications), Bluetooth, CDMA (Code Division Multiple Access), Wideband CDMA (W-CDMA), etc. The examples provided herein are thus understood as being applicable to various other mobile communication technologies, both existing and not yet formulated, particularly in cases where such mobile communication technologies share similar features as disclosed regarding the following examples.

For purposes of this disclosure, radio communication technologies may be classified as one of a Short Range radio communication technology, Metropolitan Area System radio communication technology, or Cellular Wide Area radio communication technology. Short Range radio communication technologies include Bluetooth, WLAN (e.g. according to any IEEE 802.11 standard), and other similar radio communication technologies. Metropolitan Area System radio communication technologies include Worldwide Interoperability for Microwave Access (WiMax) (e.g. according to an IEEE 802.16 radio communication standard, e.g. WiMax fixed or WiMax mobile) and other similar radio communication technologies. Cellular Wide Area radio communication technologies include GSM, UMTS, LTE, LTE-Advanced (LTE-A), CDMA, WCDMA, LTE-A, General Packet Radio Service (GPRS), Enhanced Data Rates for GSM Evolution (EDGE), High Speed Packet Access (HSPA), HSPA Plus (HSPA+), and other similar radio communication technologies.

The term "RAT system" as utilized herein refers to the hardware, software, and/or firmware components of a mobile device that support operation of at least one Radio Access Technology (RAT). A RAT system may thus include one or more microprocessors/microcontrollers and/or one or more processing circuits, where the one or more microprocessors/microcontrollers may be configured to execute program code for software and/or firmware modules to control the microprocessor/microcontrollers to operate in accordance with the protocol stack (Layer 2 and 3) and/or physical layers (Layer 1) of a particular radio access technology. The microprocessors/microcontrollers may be configured to control the one or more processing circuits and any additional components in accordance with control logic provided by the software/firmware modules defined in the program code. It is appreciated that the RAT systems for multiple RATs may be integrated, such as in the case of a multi-mode baseband modem configured to support operation of more than one RAT. Accordingly, one or more microprocessors/microcontrollers, processing circuits, and/or software/firmware modules may be shared between multiple RAT systems. Such may include unified protocol stacks (Layers 2 and 3) and/or unified physical layers (Layer 1). A multi-mode RAT system may thus refer to one or more microprocessors/microcontrollers and one or more processing circuits that cooperatively support multiple RATs, such as in accordance with master and slave RAT roles; however it is appreciated that the term "RAT system" encompasses both single- and multi-mode RAT systems. A RAT system configured for a specific radio access technology may be denoted as e.g. an LTE system, a UMTS system, a GSM system, a Bluetooth system, a WiFi system, etc. A baseband modem may be referred to as a RAT system; however it is appreciated that a multi-mode baseband modem may be composed of multiple RAT systems, e.g. at least one RAT system for each radio access technology supported by the baseband modem, where each RAT system in a multi-mode baseband modem may be discrete or integrated relative to the other RAT systems.

The term "network" as utilized herein, e.g. in reference to a communication network such as a mobile communication network, is intended to encompass both an access component of a network (e.g. a radio access network (RAN) component) and a core component of a network (e.g. a core network component).

As utilized herein, the term "radio idle mode" or "radio idle state" used in reference to a mobile terminal refers to a radio control state in which the mobile terminal is not allocated at least one dedicated communication channel of a mobile communication network. The term "radio connected mode" or "radio connected state" used in reference to a mobile terminal refers to a radio control state in which the mobile terminal is allocated at least one dedicated uplink communication channel of a mobile communication network.

Unless explicitly specified, the term "transmit" encompasses both direct and indirect transmission. Similarly, the term "receive" encompasses both direct and indirect reception unless explicitly specified.

Multi-SIM designs may need to address timing conflicts caused by the operation of multiple SIMs. For example, both Dual-SIM Dual-Standby (DSDS) and Dual-Receive Dual-Sim Dual-Standby (DR-DSDS) designs may need to share reception and/or transmission resources between two SIMs, such as on a time-sharing basis in which only one SIM can receive and/or transmit at a given point in time. Similarly, multi-SIM designs that allow for one SIM to transmit simultaneously to the other SIM receiving (which may include DSDA, DR-DSDS, and DSDS depending on the specifics of each design) may need to limit transmission resources to avoid receiver desensitization, such as by scheduling lapses in transmission (i.e. "gaps") to reduce reception interference.

Accordingly, multi-SIM designs may minimize timing conflicts between each SIM by scheduling transmission and/or reception operations for each SIM in order to minimize missed or corrupted transmission and reception occasions. However, even careful scheduling may still result in certain missed or corrupted transmission and/or reception occasions for all SIMs. For example, as previously indicated, a DSDS design may share a single set of receiver and transmitter resources between two independent SIMs. Accordingly, only one of the SIMs may receive and/or transmit at a time. It may therefore be unlikely for each SIM to be able to complete each scheduled transmission and reception occasion while participating in a transmission/reception time-sharing scheme with the other SIM, e.g. when one or both SIMs are in a radio active state.

Similar conflicts may occur between other radio access technologies, such as e.g. between a Cellular Wide Area radio access technology and a Short Range radio access technology (e.g. LTE and WiFi, LTE and Bluetooth, etc.), between two Short Range radio access technologies, etc. For example, a mobile terminal may be configured to support both an LTE radio connection and a WiFi radio connection, where certain LTE bands may interfere with WiFi bands. Alternatively, a mobile terminal may share transceiver resources between multiple such radio access technologies, and may accordingly not be able to concurrently perform radio activity for each radio access technology. Accordingly, there may exist reception and transmission conflicts in numerous mobile device designs.

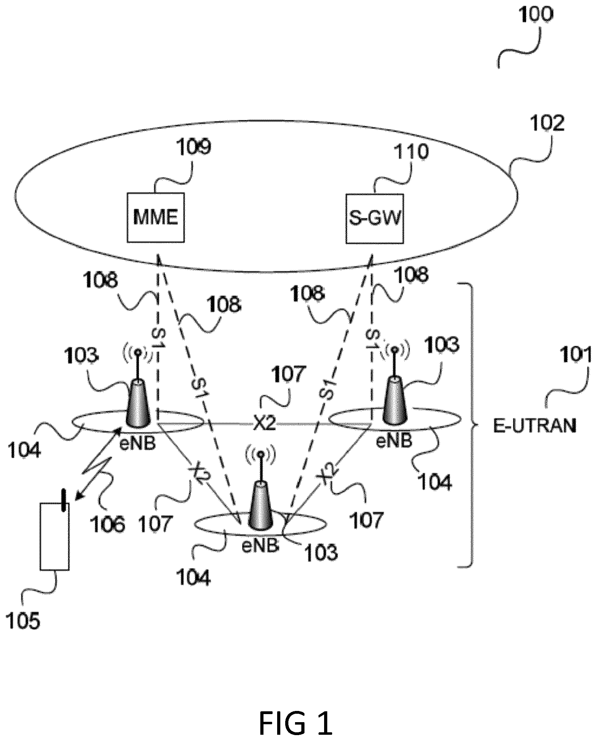

FIG. **1** shows a communication system **100**.

The communication system **100** may be a cellular mobile radio communication system (also referred to as cellular radio communication network in the following) including a radio access network (e.g. an UTRAN (UTMS (Universal Mobile Communication System) Terrestrial Radio Access Network) according to UMTS, or an E-UTRAN (Evolved UMTS Terrestrial Radio Access Network) according to LTE (Long Term Evolution), or LTE-Advanced) **101** and a core network (e.g. an EPC, Evolved Packet Core, according to LTE, or LTE-Advanced) **102**. The radio access network **101** may include one or more (mobile radio) base stations (e.g. base transceiver stations or home base stations such as NodeBs, NBs according to UMTS or eNodeBs, eNBs, Home eNodeBs, HeNBs according to LTE, or LTE-Advanced) **103**. Each base station **103** may provide radio coverage for one or more mobile radio cells **104** of the radio access network **101**. In other words, the base stations **103** of the radio access network **101** may span different types of cells **104** (e.g. macro cells, femto cells, pico cells, small cells, open cells, closed subscriber group cells, hybrid cells, for instance according to LTE, or LTE-Advanced). It should be noted that examples described in the following may also be applied to communication networks other than LTE communication networks, e.g. communication networks according to UMTS, GSM (Global system for Mobile Communication), EDGE (Enhanced Data Rates for GSM Evolution), General Packet Radio Service (GPRS), High Speed Packet Access (HSPA), etc.

A mobile radio communication terminal (e.g. a User Equipment (UE)) **105** located in a mobile radio cell **104** may communicate with the core network **102** and with other mobile radio communication terminals **105** via the base station **103** providing radio coverage in (in other words operating) the mobile radio cell **104**. In other words, the base station **103** operating the mobile radio cell **104** in which the mobile terminal **105** is located may provide the E-UTRAN user plane terminations including the PDCP (Packet Data Convergence Protocol) layer, the RLC (Radio Link Control) layer and the MAC (Medium Access Control) layer and control plane terminations including the RRC (Radio Resource Control) layer towards the mobile radio communication terminal **105**.

Control and user data may be transmitted between a base station **103** and a mobile radio communication terminal **105** located in the mobile radio cell **104** operated by the base station **103** over the air interface **106** on the basis of a multiple access method. On the LTE air interface **106**, different duplex methods, such as FDD (Frequency Division Duplex) or TDD (Time Division Duplex), may be deployed.

The base stations **103** are interconnected with each other by a first interface **107**, e.g. an X2 interface. The base stations **103** are also connected by a second interface **108**, e.g. an S1 interface, to the core network **102**, e.g. to an MME (Mobility Management Entity) **109** via an SI-MME interface **108** and to a Serving Gateway (S-GW) 110 by an S1-U interface **108**. The S1 interface **108** may support a many-to-many relation between MMEs/S-GWs **109, 110** and the base stations **103**, i.e. a base station **103** may be connected to more than one MME/S-GW **109, 110** and an MME/S-GW **109, 110** may be connected to more than one base station **103**. This may enable network sharing in LTE.

For example, the MME **109** may be responsible for controlling the mobility of mobile radio communication terminals located in the coverage area of E-UTRAN, while the S-GW **110** may be responsible for handling the transmission of user data between mobile radio communication terminals **105** and the core network **102**.

In case of LTE, the radio access network **101**, i.e. the E-UTRAN **101** in case of LTE, may be seen to include or essentially consist of the base station **103**, i.e. the eNBs **103** in case of LTE, providing the E-UTRAN user plane (PDCP/RLC/MAC) and control plane (RRC) protocol terminations towards the UE **105**.

Each base station **103** of the communication system **100** may control communications within its geographic coverage area, namely its mobile radio cell **104** that is ideally represented by a hexagonal shape. When the mobile radio communication terminal **105** is located within a mobile radio cell **104** and is camping on the mobile radio cell **104** (in other words is registered with a Tracking Area (TA) assigned to the mobile radio cell **104**) it communicates with the base station **103** controlling that mobile radio cell **104**. When a call is initiated by the user of the mobile radio communication terminal **105** (mobile originated call) or a call is addressed to the mobile radio communication terminal **105** (mobile terminated call), radio channels are set up between the mobile radio communication terminal **105** and the base station **103** controlling the mobile radio cell **104** in which the mobile station is located. If the mobile radio communication terminal **105** moves away from the original mobile radio cell **104** in which a call was set up and the signal strength of the radio channels established in the original mobile radio cell **104** weakens, the communication system **100** may initiate a transfer of the call to radio channels of another mobile radio cell **104** into which the mobile radio communication terminal **105** moves.

In practice, a plurality of mobile radio communication networks of the same technology (but e.g. different mobile radio network operators (MNOs)) and/or different mobile radio technologies (but e.g. the same or different mobile radio network operators (MNOs)) including a radio access network **101** and a core network **102** as described above are provided by different operators such that the coverage areas of the communication networks overlap, i.e. a mobile radio communication terminal **105** may be located within a mobile radio cell **104** operated by a base station **103** belonging to a first mobile radio communication network, e.g. of a first operator (e.g. a first MNO) and at the same time be located within a radio cell **104** operated by a base station **103** belonging to a second mobile radio communication network, e.g. of a second operator (e.g. a second MNO).

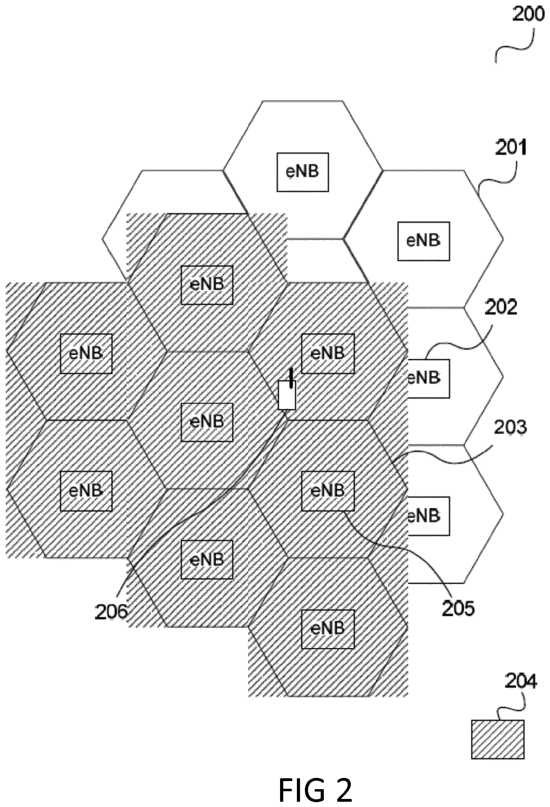

**FIG. 2** shows a radio cell arrangement **200**.

The radio cell arrangement **200** includes a first plurality of mobile radio cells **201** (shown without hatching) operated by a plurality of first base stations **202** of a first communication network, and a second plurality of mobile radio cells **203** indicated by a hatching **204** operated by a plurality of second base stations **205** of a second communication network. Although all base stations **205** are indicated as eNBs in this example, the first communication network and the second communication network may use the same or different radio access technologies (RATs) of e.g.: LTE, GSM, UMTS etc.

As illustrated, the second plurality of mobile radio cells **203** overlaps the first plurality of mobile radio cells **204** such that a mobile radio communication terminal **105** located in the overlapping area may connect to both the first communication network and to the second communication network, e.g. may both register with a base station **202** of the first communication network and a base station **205** of the second communication network.

For being able to use both the first communication network and the second communication network, the mobile radio communication terminal **105** may include two or more subscriber identity modules, e.g. SIMs or USIMs (Universal Subscriber Identity Modules). The mobile radio communication terminal **105** may be a multi-SIM device capable of communicating via two or more communication networks. The two or more communication networks may be of the same radio access technology type, the same network operator, different technology type, different network operator, or a combination thereof.

Multi-SIM offers a variety of operation modes. Considering two SIM cards, two main levels of differentiation are Dual-SIM Dual Active (DSDA) and Dual-SIM Dual Standby (DSDS). DSDA has two full modems, one for each SIM card, with receive and transmit capability operating simultaneously for independent services, e.g. one service for voice and one service for data. On the other hand, DSDS has a single modem which is shared between two SIM cards, such that both SIMs are in RRC standby/idle mode and can simultaneously receive paging for communication transactions.

The communication transactions may be carried out between the core network **102** of the communication system **100** and the mobile radio communication terminal **105**. The communication transactions, for example, may be a voice call, a delivery of a text message, or a procedure used in MME (Mobility Management Entity) **109** for locating the mobile radio communication terminal **105**. Other types of communication transactions may also be carried out between the core network **102** of the communication system 100 and the mobile radio communication terminal **105**.

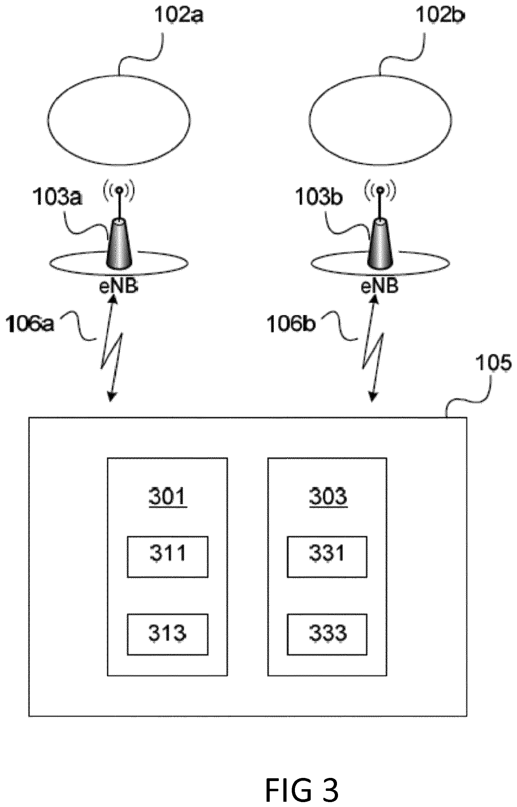

FIG. **3** shows a high level architecture of a mobile radio communication terminal **105** and a connection between the mobile radio communication terminal **105** and a plurality of mobile radio communication networks.

The mobile radio communication terminal **105** may include a first SIM **301** and a second SIM **303.**

The first SIM **301** may include a first controller **311** and a first memory **313** configured to store a first subscriber identity. The first subscriber identity, for example, may be an International Mobile Subscriber Identity (IMSI) number assigned exclusively to the first SIM **301**. The IMSI number may be used by an operator of a mobile radio communication network for identifying the first SIM **301**. The first subscriber identity, for example, may include a plurality of IMSIs. Each of the IMSIs may be assigned exclusively to the first SIM **301**.

The second SIM **303** may include a second controller **331** and a second memory **333** configured to store a second subscriber identity. The second subscriber identity, for example, may be an International Mobile Subscriber Identity (IMSI) number assigned exclusively to the second SIM **303.** The IMSI number is used by an operator of a mobile radio communication network for identifying the second SIM **303.** The second subscriber identity, for example, may include a plurality of IMSIs. Each of the IMSIs may be assigned exclusively to the second SIM **303.**

As shown in FIG. **3,** The first SIM **301** may be associated with a first mobile radio communication network which may include a first core network **102a** and a first base station **103a,** and the second SIM **303** may be associated with the second mobile radio communication network which may include a second core network **102b** and a second base station **103b.** Control and user data may be transmitted between the first base station 103a and the first SIM **301** over a first air interface **106a.** Similarly, control and user data may be transmitted between the second base station **103b** and the second SIM **303** over a second air interface **106b.** The first SIM **301** and the second SIM **303** may be perceived by the first and second mobile radio communication networks, respectively, as a mobile radio communication terminal **105** having an IMSI number as an exclusive identification. As such, the first SIM **301** and second SIM **303** may receive paging for mobile radio communication transactions (e.g.: a voice call, a delivery of text message, etc.) from the first and second mobile radio communication networks, respectively.

Once an incoming call for one of the SIMs **301, 303** is detected in the DSDS device **105,** there are various ways for the mobile radio communication terminal **105** to react on the incoming call depending on the type of the call and the status of the respective other SIM **301, 303** (e.g. standby, in a call, etc.). In a case that two independent receive paths are present in the mobile radio communication terminal **105,** e.g. the DSDS device **105,** e.g. due to DL (downlink) Carrier Aggregation support, they can be used independently in RRC idle mode to receive the paging of the two SIMs **301, 303.** This is also called Dual Receive DSDS (DR-DSDS).

The mobile radio communication terminal **105** may also use only one receive path to receive the paging for both SIMs **301, 303** (e.g. operated on two different mobile radio communication networks). The receive path is shared in an intelligent manner between both SIMs **301, 303.** For instance, one of the SIMs **301, 303** may be configured to operate in an RRC active mode, i.e. having an active data connection, while the other SIM **301, 303** may be configured to operate in an RRC idle mode. In this case, the RRC inactive (idle) SIM may 'steal' (in other words "borrow" or "use") the receive path from the active SIM for a predetermined period of time to receive the paging and/or to update (or register) its location with the surrounding mobile radio cells in a tracking area (TA), which are necessary to maintain basic RRC idle mode mobility. This behavior is also called Data versus Paging (DvP) or enhanced Data versus Paging (eDvP). DvP allows only paging reception on the second SIM, whereas eDvP allows full RRC idle mode mobility, that is possible without sending data, on the second SIM. Both of the SIMs may also be in an RRC idle mode at the same time with only one receive path.

The SIM operating in the RRC idle mode may wake up for a predetermined period of time at a regular interval (periodicity) to listen to paging from a base station of the associated mobile radio communication network and/or to update its location with surrounding mobile radio cells. During this predetermined period of time, the SIM in the RRC active mode may not have radio access to its associated mobile radio communication network. In various aspects of this disclosure, the predetermined period of time at the regular interval is selected or predefined or determined in accordance with a paging procedure of the associated communication network the SIM connected to. The example, the predetermined period of time may be in accordance to the paging procedures of a respective mobile communication network standard, e.g. GMS, UMTS, LTE or other mobile communication network standards provided. In various aspects of this disclosure, the predetermined period of time at the regular interval is in accordance to the Tracking Area Update (TAU) procedure of the associated communication network the SIM connected to. For example, the predetermined period of time may be in accordance to the TAU procedures of a respective mobile communication network standard, e.g. GMS, UMTS, LTE or other mobile communication network standards provided.

Whenever the SIM in the RRC idle mode wakes up to listen to the paging and/or to update its location with the surrounding mobile radio cells using the single receive path of the mobile radio communication terminal **105** at the predetermined period of time while there is an ongoing packet transmission on the SIM in the RRC active mode, the SIM in the RRC active mode may not be able to receive and hence decode the packet or packets transmitted by the base station of its associated mobile radio communication network. As a result, the packet or packets is/are discarded by the mobile radio communication terminal **105** and one or more negative acknowledgement (NACK) messages are sent to the base station by the SIM in the RRC active mode when the SIM in the RRC active mode gains radio access to its associated mobile radio communication network. Upon receiving the NACK message(s), the base station may perform a re-transmission of the packet(s) indicated by the NACK message(s), sending the same copy of the "lost" packet to the SIM in the RRC active mode. The re-transmission may be a copy of the lost packet, the same data transmitted through multiple frames, the data transmitted using a different redundancy version specified in a transport format, or any combination thereof. The re-transmission of the packet(s) may be in accordance to the same or another transport format chosen by the base station and/or mobile radio communication terminal. The SIM in the RRC active mode will be able to receive and decode the re-sent packet(s) so long as the re-transmission time does not coincide with the predetermined period of time the SIM in RRC idle mode receiving the paging and/or updating its location with surrounding mobile radio cells. Upon successfully receiving and decoding the re-sent packet(s), the SIM in the RRC active mode sends one or more acknowledgement (ACK) messages to the base station of its associated mobile radio communication network.

The SIM in the active mode may be requested by the base station to periodically send a measurement report to the base station. The base station may utilize the measurement report received on a periodic basis for adapting its transmission to match the capability of the mobile radio communication terminal **105**. The measurement report may include, among others, a signal quality indication and block error rate. The time-based signal quality indication may exhibit irregularities at a predetermined period of time which correspond to weak signals. During the predetermined period of these weak signals, the SIM in the RRC active mode may not be able to receive and decode the packet or packets transmitted by a base station, resulting in packet loss and re-transmission of the lost packet.

The discarded one or more packets result in wasted radio resources in terms of overall base station throughput. Furthermore, packet loss and triggering of re-transmission usually translate into a non-optimized behaviour of the connection(s) due to the base station settings being minded for single SIM devices, instead of Multi-SIM devices.

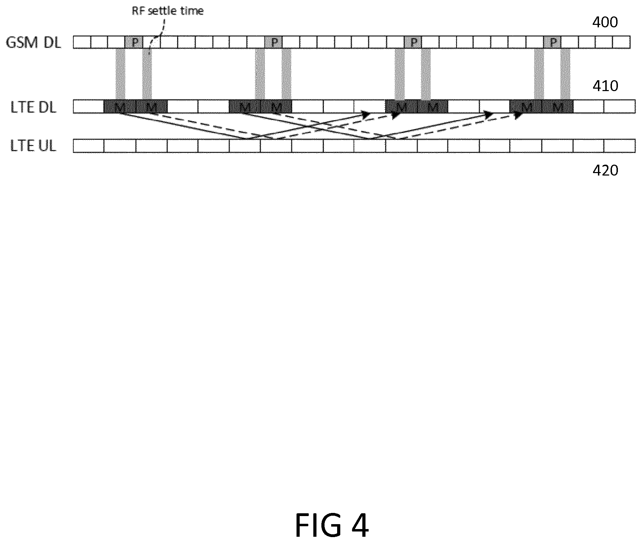

FIG. **4** shows timing charts **400-420** which illustrate an exemplary scenario in which a first SIM in a DSDS design may miss multiple reception occasions due to reception resource sharing with a second SIM. In the exemplary scenario illustrated in FIG. **4,** the first SIM (timing charts **410** and **420**) may be a Long Term Evolution (LTE) SIM, which may be e.g. only capable of supporting LTE communications or e.g. may be capable of supporting multiple Radio Access Technologies (RAT) with LTE currently serving as the master RAT. The second SIM may be a Global System for Mobile Communications (GSM) SIM, which may be e.g. only capable of supporting GSM communications or e.g. may be capable of supporting multiple RATs with GSM currently serving as the master RAT. Both the first SIM and the second SIM may be included in a single mobile device (as will be later detailed), and may both be configured to communicate with respective mobile communication networks via a Radio Access Network (RAN) interface of each respective mobile communication network, such as via a wireless radio interface with one or more base stations.

As depicted in FIG. **4,** timing chart **400** may correspond to downlink subframes of the second SIM (GSM SIM, e.g. GSM burst periods each of .577 ms in duration), while timing charts **410** and **420** may correspond to downlink and uplink subframes, respectively, of the first SIM (LTE SIM, e.g. LTE subframes each of 1 ms in duration). Although various aspects of this disclosure are illustrated using subframes of a frame, it is to be noted that in general, any portion of transmission in time may be used. Each depicted time unit of timing chart **400** may thus be a GSM burst period while each depicted tine unit of timing charts **410** and **420** may be an LTE subframe. For simplicity, the description may collectively refer to all such scheduling time periods as a "subframe", which is thus understood as referring to a scheduling time period for any radio access technology. In the following description of the exemplary scenario of FIG. **4,** the first SIM may be in a radio active state while the second SIM may be in an idle radio state. However, it is appreciated that alternatively the first SIM and the second SIM may both be in a radio active state or may both be in a radio idle state, as both such scenarios may include time periods in which one or both SIMs may need to receive scheduled downlink data from the network.

The second SIM may need to perform certain downlink reception operations in accordance with the current radio state of the second SIM, e.g. radio idle state in the exemplary scenario of FIG. **4.** For example, the second SIM may need to read scheduled paging occasions (e.g. paging bursts in a GSM context), read scheduled system information (e.g. System Information Type messages in a GSM context), and perform radio measurements (e.g. intra-frequency, inter-frequency, and/or inter-RAT depending on the presence of any slave RATs for the second SIM). The second SIM may have some flexibility in performing certain reception operations while having limited or no flexibility in scheduling other reception operations. For example, the network may transmit paging and system information messages only during certain predetermined time periods. Accordingly, the second SIM may need to perform reception during these time periods in order to read paging occasion and system information. In contrast, the second SIM may be able to perform radio measurements on a more flexible basis, as such radio measurements may not need to performed during a specific time period designated by the network (although be somewhat limited as to not conflict with other scheduled reception activity in the case of inter-frequency and inter-RAT measurements). Accordingly, the second SIM may have some flexibility in performing radio measurements while only limited or no flexibility in reading paging occasions and system information.

As shown in FIG. **4,** the second SIM may need to periodically read paging occasions (e.g. paging bursts in a GSM context) transmitted by the network (denoted as light gray "P" subframes on timing chart **400**). The scheduling for the paging occasions may be determined by the network, such as according to a predefined scheduling period, and accordingly the second SIM may be required to listen to read the paging occasions in order to identify whether further downlink data is scheduled for the second SIM.

Accordingly, in a DSDS design, the second SIM may require access to shared reception resources during the scheduled paging occasions in order to receive and read the paging occasions. As a result, the first SIM may not have access to the shared reception resources during the time periods in which the second SIM is granted access to the reception resources.

Furthermore, the shared reception resources may not be capable of instantaneously switching between reception for the first SIM (e.g. LTE) and reception for the second SIM (e.g. GSM). For example, an RF transceiver component may need to re-calibrate (such as e.g. filter tuning) to perform the switch between reception for the first SIM to reception for the second SIM (and vice versa). As depicted in FIG. **4,** there may thus exist an RF settling time which includes a time window in which the shared reception resources switch from reception for the first SIM to reception for the second SIM, and subsequently back to reception for the first SIM.

The first SIM may therefore experience time periods during which reception for the first SIM is suspended. Accordingly, the first SIM may miss certain subframes during the suspended time periods as shown in FIG. **4** (denoted as dark gray "M" subframes on timing chart **410**). Downlink data blocks for the first SIM contained in the missed subframes may thus be lost. The term "data block" as used herein may refer to the data contained in a single subframe, e.g. a Transport Block in an LTE context. However, this is not considered limiting in nature, and "data block" may additionally include blocks of data that do not exactly correspond to a subframe, such as two subframes of data, a half-subframe of data, etc.

The first SIM may therefore need to receive "retransmissions" of the data contained in each missed subframe. LTE, for example, may utilize a Hybrid Automatic Repeat Request (HARQ) retransmission scheme. In such a HARQ retransmission scheme, an LTE User Equipment (UE) may transmit an Acknowledgement (ACK) or Non-Acknowledgement (NACK) in response to each downlink data block (i.e. one subframe of data; "transport block" in an LTE context) to signal to the network that the data block was successfully or unsuccessfully received, respectively. In accordance with a frequency division duplexing (FDD) context as specified by the 3rd Generation Partnership Project (3GPP), an LTE UE may transmit an ACK/NACK for a data block in the fourth subframe following the scheduled initial downlink subframe of the data block (or e.g. between 4-13 subframes for a time division duplexing (TDD) LTE context). A 4-subframe ACK/NACK delay is depicted in FIG. **4** by the arrows between timing charts **410** and **420.**

As the first SIM will lose the data blocks in the missed subframes due to the reception activity of the second SIM, the first SIM may subsequently transmit NACKs (on uplink timing chart **420**) to the network during the 4th subframe following each missed data block, thus signaling to the network that a retransmission of the missed data block is required. Accordingly, the network may receive the NACK transmitted by the first SIM and proceed to retransmit the missed data blocks. As will be detailed, the first SIM may additionally miss subframes for reasons not directly related to radio activity of the second SIM, such as due to poor downlink channel quality. The first SIM may similarly transmit NACKs in response to unsuccessful reception of these subframes.

In accordance with an LTE context as specified by 3GPP, downlink HARQ retransmissions may be asynchronous. Accordingly, following transmission of a NACK an LTE UE may not have specific prior knowledge of when the network will perform the retransmission. Accordingly, the network may retransmit the missed subframe anytime within 8-50 subframes (8-50 ms) following the initial missed subframe, e.g. at least 4 ms following transmission of a NACK, where the network may provide an indication control information in a given subframe (e.g. Physical Downlink Control Channel (PDCCH)) specifying that the given subframe contains the retransmitted data block. Each data block and retransmitted data block may contain identification information (or may be included along with control information containing identification information), thus allowing an LTE UE to identify each retransmitted data block.

Returning to the exemplary scenario of FIG. **4,** the first SIM may transmit a NACK to the network in the 4th subframe following each missed data block. As depicted by the arrows between timing charts **410** and **420** in FIG. **4,** the network may then retransmit the missed data block a certain number of subframes following the NACK (and the initially missed subframe). For example, if the network is experiencing high load conditions, the network may perform the retransmission as soon as possible, e.g. in the 4th subframe following the NACK (i.e. the 8th subframe following the initially missed subframe). However, depending on the reception activity of the second SIM required to receive paging occasions, the first SIM may not be able to receive any data during the retransmission subframe. Accordingly, the first SIM may miss the initial data block in addition to the retransmitted data block. The first SIM may thus need to transmit another NACK and attempt to receive a further retransmission of the data block. It is appreciated that similar situations may occur in which reception activity by the second SIM causes the first SIM to miss multiple transmissions (including retransmissions) of the same data block (as opposed to the initial transmission subframe and an immediately following retransmission subframe as detailed immediately above). Each missed transmission and retransmission may warrant further retransmissions, thus measurably decreasing throughput. It is also appreciated that the first SIM may miss subframes due to other reasons in addition to radio activity by another SIM on shared transceiver resources, such as poor channel quality, Out-of-coverage (OOC) scenarios, etc. Accordingly, such additional missed data blocks may require similar retransmissions, and may align with radio activity by another SIM in order to cause multiple retransmissions of the same data block.

Such timing considerations may additionally apply in the uplink direction. For example, a multi-SIM design may allow for one SIM to transmit concurrently to the other SIM receiving. However, transmission by one SIM concurrent to reception by the other SIM may lead to receiver desensitization, in which transmission for one SIM interferes with the reception for the other SIM. Returning to the exemplary scenario of FIG. **4,** the first SIM may be capable of transmitting at the same time that the second SIM is receiving. However, this may introduce interference on reception by the second SIM. Accordingly, transmission for the first SIM may need to be controlled to ensure that interference on reception for the second SIM is minimized, such as by either scheduling transmission gaps for the first SIM during time periods in which the second SIM is scheduled to receive. Accordingly, the first SIM may not be able to transmit simultaneous to reception activity by the second SIM, such as time periods during which the second SIM is scheduled to receive paging occasions as detailed regarding FIG. **4.**

Accordingly, the first SIM may not be able to perform any transmission during certain time periods. However, the first SIM may need to transmit ACKs and/or NACKs in response to received transmissions, such as during the 4th subframe following each received subframe. The first SIM may therefore not be able to transmit an ACK/NACK during subframes which the second SIM is receiving, which may as a result severely disrupt downlink HARQ procedures and lead to further retransmissions by the network as no feedback was received.

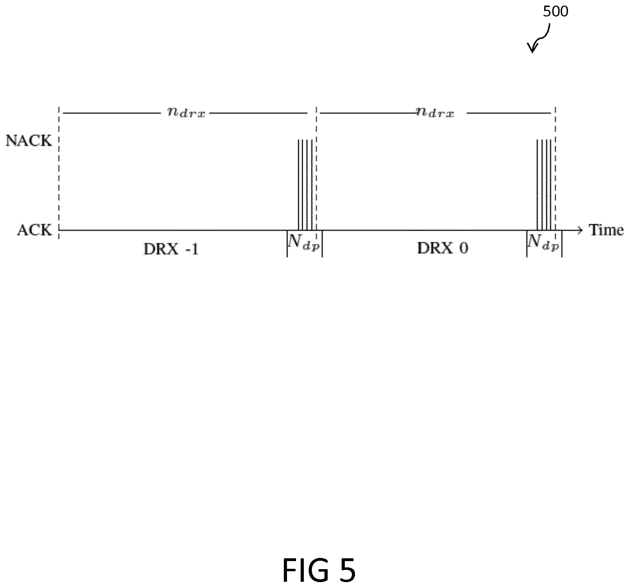

The characteristics of the above analyzed Multi-SIM induced subframe losses is that they may occur in bursts, repeated, for example, within periods of up to a couple of seconds. On an active data connection, the conflicts may cause a subframe acknowledgement pattern similar to that shown in FIG. **5.** In various aspects of this disclosure, FIG. **5** is a time-line diagram **500** illustrating the content of a buffer which contains a history of the UE subframe status reports received on an active connection and which can be indicated as $ack_{status}$. In FIG. **5** the statuses are shown within a discrete time frame of two Discontinuous Reception (DRX) periods of the idle connection, namely **DRX-1** and **DRX 0.** Each period may consist of $n_{drx}$ samples, $n_{drx}$ being the number of Acknowledgement (**ACK**) messages per DRX mode of the idle Subscriber Identity Module (SIM). In LTE, $n_{drx}$ is equal to a multiple of the idle SIMs DRX mode indicated as $drx_{idleSIM}$ as shown in Equation (1).

$$n_{drx} \approx 235 \, drx_{idleSIM} \tag{1}$$

FIG. **5** illustrates how, for each DRX period, eight Not Acknowledgements (**NACKs**), two per spike, are received by the base station (BS) due to the idle mode operation of reading the four bursts including a GSM paging command. $N_{dp}$ indicates the number of samples which include a window of the $ack_{status}$ history and which can be analyzed for multiple aligned previous DRX modes.

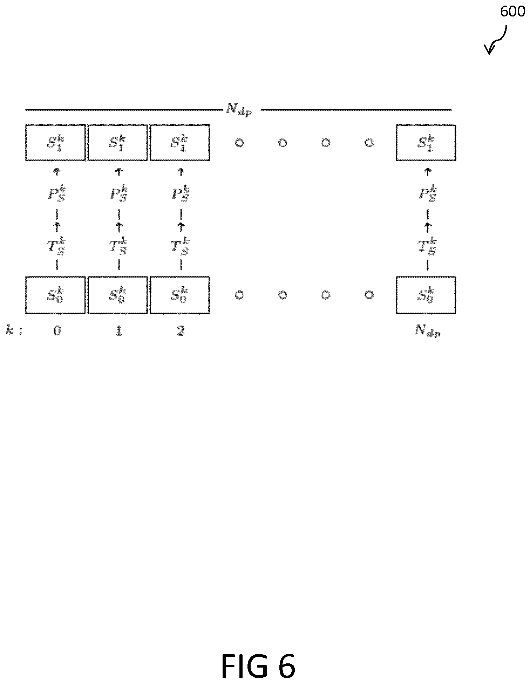

FIG. **6** is a diagram illustrating a Markov process **600** for each subframe within the window $N_{dp}$ with system states $S_0^k$ based on multiple DRX periods. A discrete Markov chain is a stochastic model which may be used to model a random process for which the states changes based on the current state of the system. Using the Markov chain **600** as a model of Multi-SIM behavior, it is possible to predict the probability of the idle mode operations to be in a subframe loss inducing state $S_1^k$ given the current state of the system $S_0^k$, as shown in FIG **6.** The variable **k** depicted in FIG **6** ranges from 0 to $N_{dp}$ and hereby indicates the window in which the $ack_{status}$ buffer is analyzed. The prediction is created using the state matrix $T_S^k$ and the current state probabilities $P_S^k$, with $S = S_0^k$. The future state $S_1^k$ is assumed to be the state which has the highest transition probability in the Markov analysis. The state probability $S_1^k$ is compared for each of the DRX periods taken into account and the one with the highest combined probability is chosen. Hereby, the process determines a loss probability for future subframes.

The variable $N_{dp}$ constrains the algorithm to only analyze a part of the samples $n_{drx}$, and hereby constrains the size of the Markov models P and T. Furthermore, it reduces the probability of misinterpreting channel noise as Multi-SIM subframe loss. $n_{drx}$ varies depending on network settings, but the ACK pattern for each period are the same, hence the algorithm takes the periodicity into account. The periodicity can be analyzed by combining the current states $S_0^k$ in the Markov chain of several backtracked data indices. The ACK pattern has a binary value, as it is either ACK or NACK and therefore the current state can be calculated as shown in Equation (2).

$$S_0^k = \sum_{n=0}^{N_{bt}} ack_{status} \left(k - n \cdot n_{drx} - N_{dp}\right) \cdot n^2 \tag{2}$$

with $N_{bt}$ being the number of DRX periods to track back in history, and $S_0^k$ being the current state at position *k*, with *k* ranging from $-N_{dp}$ to 0, as seen in FIG **6**. Until the number of DRX periods in the buffer is equal to $N_{bt}$, the sum in Equation 2 goes from 0 to the number of DRX periods available.

The Markov model **600** used may be combined with the initial models $T_{init}$ and $P_{init}$, and the adapted models

$T_{adapted}$ and $P_{adapted}$. The initial models may be determined either by experimental analysis or through mathematical modelling, whereas the adapted models are continuously updated based on observations throughout the time of operation. The model 600 can be updated for each successful prediction of a Multi-SIM induced subframe error, using a weighted mean of the observations. Changing the history depth of the buffer allows to control how the process reacts to changes related to how idle mode operations are performed. With a low depth, the process adapts quickly to changes in the idle mode operation, but may also start predicting channel induced subframe errors as Multi-SIM subframe loss. With a high adaptation buffer depth, the adaptation speed becomes lower, but channel induced error becomes negligible. The dominance of the initial values may be defined by a factor $\alpha$, ranging from 0 to 1 as seen in the equations below. If $T_{adapted}$ or $P_{adapted}$ gets significantly different from the initial values, these may override the result of the prediction if $\alpha$ is chosen low enough, usually below 0.3. This property is significant in order to achieve a low amount of false hits i.e. in a case with very good radio quality where, for example, the idle mode connection does not read all Paging Channels (PCH) bursts.

$$T_S = \alpha T_{init} + (1 - \alpha) T_{adapted} \qquad (3)$$

$$P_S = \alpha P_{init} + (1 - \alpha) P_{adapted} \qquad (4)$$

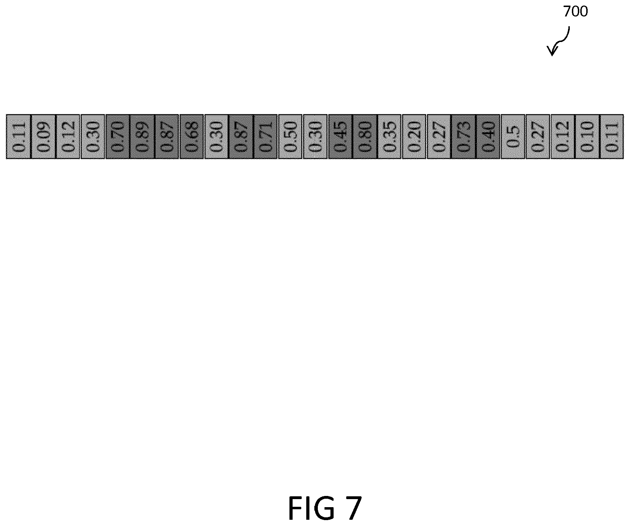

In this way the described algorithm can continuously supply the Base Station (BS) **103** with a prediction of potential subframe loss due to Multi SIM operation in a mobile communication network, for example a Long Term Evolution (LTE) network. FIG. **7** illustrates a snapshot of the process's output within a window **700** in which a Multi-SIM gap is occurring. In various aspects of this disclosure, FIG. **7** illustrates how the process assigns the output probability to each future subframe. The assigned value shown in each subframe is the probability of ending in a NACK state and is a value varying from 0 to 1. This loss probability of a given subframe in the future can be indicated as $P_{NACK}$. Furthermore, the dark grey subframes indicate the actual loss pattern from Multi-SIM gaps. What can be seen is that the output probability may vary within the actual gaps from 0.4 to 0.89, which is overlapping with the NACK probability seen in between the gaps. This may be due to the variation in how Multi-SIM impact collides with channel induced errors.
The process described above may include a further sub-process of updating the transition matrix T through a Q-Learning algorithm, which is a reinforced learning algorithm which can be used to find the model states for i.e. a Markov model, rewarding each decision based on the actual outcome. The Q-Learning algorithm finds the optimal action selection policy by traversing the different state selections for each state S, and can update at runtime, based on the reward granted for each action. The application of the Q-learning to the transition matrix T can be shown in Equation (5)

$$\mathrm{T}(s_t, a_t) = T'(s_t, a_t) + \alpha(r_{t+1} + \gamma \cdot max\, \mathrm{T}(s_{t+1}, a_t) - \mathrm{T}(s_t, a_t)) \qquad (5)$$

with $\mathrm{T}(s_t, a_t)$ being the new value of T given the current state $s_t$ and action $a_t$, $T'$ being the old value, $\alpha$ being the learning rate which decides to what extent the new information overrides the old, $r$ being the reward for the current action , and $\gamma$ being the discount factor which decides how the algorithm weighs future rewards, i.e. a discount factor of 0 makes the algorithm only consider the current reward, whereas a discount factor of 1 or higher may cause it to diverge.
The reward $r$ can be calculated based on the outcome of the action $a_t$, therefore it can be calculated based on the amount of correctly predicted NACKs within a certain time interval. By way of example, the reward $r$ can be calculated as shown in Equation (6), based on the loss probability $P_{NACK}(k)$ at the current index k, and the actual loss pattern found in the buffer $ack_{status}$.

$$r = \sum_{k=-N_{bt}}^{0} ack_{status}(k) \cdot P_{NACK}(k) \qquad (6)$$

Hereby, the reward value $r$ increase as the loss predictions are correct, whereas it decreases if losses are detected where there is none. In this way the algorithm can adapt to the subframe losses if the UE changes gap pattern throughout the connection. Unlike conventional Q-learning behavior algorithms, this process shall not traverse different states to find the optimal, but rather adapt to the current behavior of the UE gap pattern, hence the discount factor $\gamma = 0$.
Supplying the Radio Resource Management (RRM) and Radio Resource Control (RRC) with information related to the probability $P_{NACK}(k)$ for losing a given subframe provided by the algorithm described above, allows for optimization of settings with respect to Multi-SIM operation. For example said information may be used by the scheduler in order not to waste spectrum. For example in LTE, it is possible for the scheduler to dynamically assign an amount of Resource Blocks to the UE for either up- or downlink for each Transmission Time Interval (TTI). A resource may for example include 12 subcarriers of data through 12, or 14 symbols for the entire 1ms TTI. This flexibility gives the BS opportunity to optimize the spectral efficiency of the network based on Key Performance Indicators (KPI) such as the network load, and the potential throughput for each UE. The Base Station (BS) may use the prediction output $P_{NACK}(k)$ provided by the algorithm described above to optimize its scheduling strategy.

One conventional scheduling approach is the Proportional Fair Scheduling (PFS) process, according to which the Base Station (BS) **103** schedules a user when its instantaneous channel quality is high relative to its own average channel condition over time. In various aspects of this disclosure, the Proportional Fair Scheduling (PFS) process provides a metric $I(k)$ for each UE in each given subframe $k,$ which gives priority in scheduling, so that higher values make the user more likely to be scheduled. This metric **I** provided by the conventional Proportional Fair Scheduling (PFS) algorithm is shown in Equation (7):

$$I(k) = \frac{T(k)^{\alpha}}{R(k)^{\beta}} \tag{7}$$

wherein $T$ denotes the potential data rate for an UE in the present timeslot, $R$ is an average of the UEs prior data transfers, while $\alpha$ and $\beta$ are factors used to tune the algorithm and are equal to lin the 3G scheduler. In practical implementations, the calculation of $I(k)$ may include metrics such as the UEs priority or the network load.

One possible way to influence the priority as a result of Multi-SIM gaps is to include the prediction output $P_{NACK}(k)$ provided by the algorithm described above in the scheduling decision as a Multi-SIM scaling factor as shown in Equation (8):

$$I(k) = \frac{T(k)^{\alpha}}{R(k)^{\beta}} \cdot \gamma^{P_{NACK}(k)} \tag{8}$$

where, with respect to the conventional value of $I(k)$ shown in Equation (7), the factor $\gamma^{P}{}_{NACK}{}^{(k)}$ reduces the priority of the UE at indexes $k$ where it is highly likely that the subframe $k$ is lost. With $P_{NACK}(k)$ varying from 0 to 1, the value of $I(k)$ shown in Equation (7) decreases exponentially when $P_{NACK}(k)$ increases, while the scaling factor $\gamma$ determines the aggression of the metric reduction due to Multi-SIM operation. Using the prediction output $P_{NACK}(k)$ in order to affect the scheduler, the performance can be improved in two different ways. At first, the BS does not waste resources by scheduling the data in a subframe where the data has a high probability of being lost. This will increase the overall throughput achievable by the UE, especially with multiple connected UEs enabled by Multi-SIMs. Secondly, the BS will be able to avoid to schedule high latency subframes within subframes having high loss probability. This will result in an increase of the overall throughput and latency performance for a specific UE

The information related to the probability $P_{NACK}(k)$ for losing a given subframe provided by the algorithm described above may also be used by the Adaptive Modulation and Coding (AMC) process to select a more robust Modulation and Coding Scheme (MCS) in order to increase probability of reception of a given subframe. Low-order modulation is more robust and can tolerate higher levels of interference while providing a lower transmission bit rate. On the other hand high-order modulation provides a higher bit rate but is more sensitive to interference, noise and channel estimation errors.

It is possible to vary the MCS based on each subframe's coverage percentage, such that the required robustness is met. In general, this can be estimated based on the previous, and current loss probabilities $P_{NACK}(k)$. The higher the loss probability $P_{NACK}(k)$ of the current subframe $k$ is, the more need a high reduction in the MCS is needed. Similarly; the higher the previous loss probability $P_{NACK}(k)$ is, the more likely is it that a large portion of the current data is covered, due to time misalignment between the idle mode SIM and the data SIM. The function controlling this variation of the MCS is denoted as **g** and it may affect the Modulation and Coding Scheme (MCS) of a Multi SIM environment ($MCS_{Msim}$) as shown in Equation (9):

$$MCS_{Msim} = MCS_{current} - g(P_{NACK}) \tag{9}$$

Using the function **g**, which may assume a numerical value ranging, for example, from 1 to 4, it is possible to decrease the MCS when the probability of partially covered subframes is high. It is beneficial for the BS to use information about gap placements in order to improve the reception probability of subframes by correcting the MCS of data with high loss probability. This will make the Multi-SIM operation more Transmission Control Protocol (TCP) friendly and will reduce the experienced latency by the end user.

On the higher layers, LTE data transfers are instantiated using IP Packets. These packets are created by the IP Layer and conveyed to the Packet Data Convergence Protocol (PDCP), which does header compression and conveys PDCP Protocol Data Units (PDUs) to the Radio Link Control (RLC) Layer. Each PDCP PDUs may be considered a considered a RLC Service Data Unit (SDU). If the RLC SDU size exceeds the amount of granted resources within a subframe, it is fragmented into RLC PDUs. If the SDU is small compared to the granted data resource, multiple SDUs can be conveyed in a single RLC PDU. The RLC PDU is added with a Cyclic Redundancy Check (CRC) within the Medium Access Control (MAC) making it a Transport Block (TB). If the TB size does not comply with the maximum Code Block (CB) sizes of the MAC layer, being 6124 bits, the Transport Block (TB) is further split into multiple CBs.

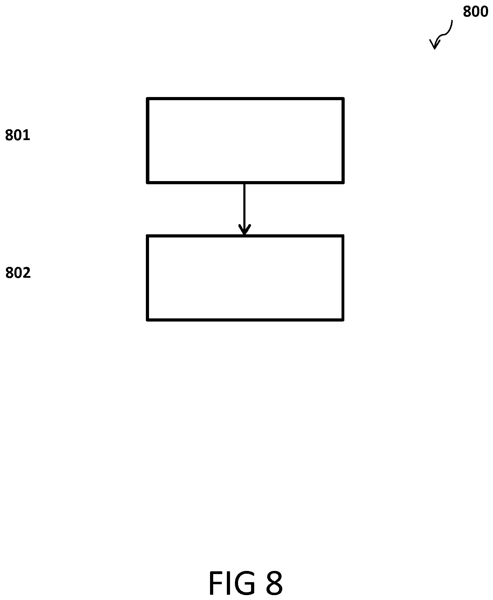

FIG **8** shows a flowchart **800** according to an aspect of this disclosure. It is appreciated that flowchart 800 is exemplary in nature and may thus be simplified for purposes of this explanation.

In **801** a probability metric for a subframe of a frame is determined, the frame being part of a signal transmitted between a node of a mobile communication network and a mobile communication terminal, in which the probability metric for the subframe indicates a probability that the subframe is lost during the transmission-

In **802** resources to the mobile terminal are assigned, taking account of the determined probability metric

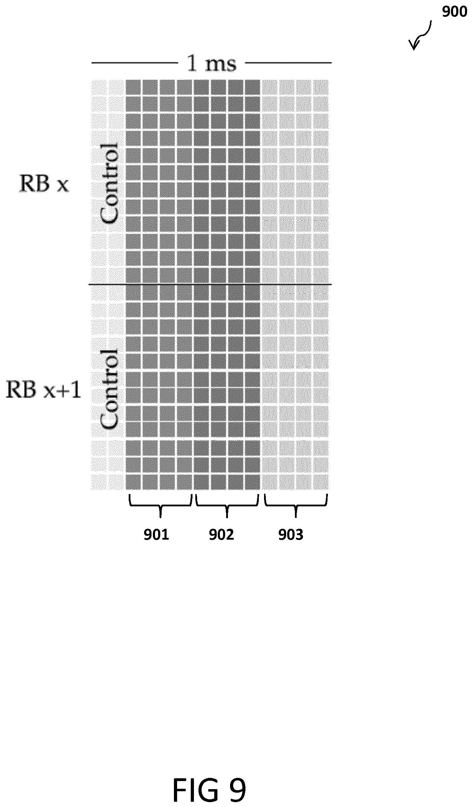

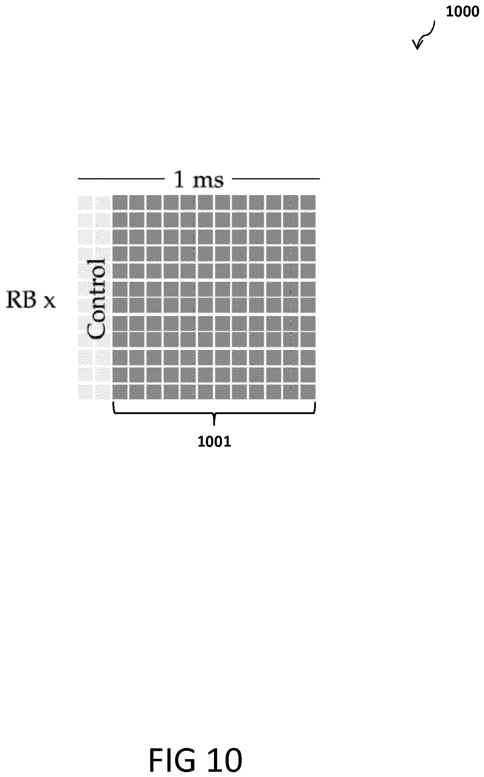

FIG **9** and FIG **10** illustrate how splitting the TB up into multiple CBs reduces the spread in time of the data, and hereby reducing the probability of receiving partially covered Transmission Time Intervals (TTIs).

FIG **9** is a schematic diagram illustrating data distribution for a high MCS data channel with three CBs being carried by two RBs. By way of example, FIG. **9** illustrates two Resource Blocks (RBs) of UE assigned resources **900,** namely RB x and RB x+1. In FIG. **9,** the amount of resources granted to the UE requires the TB to be split into three CBs, namely the Code Blocks **901, 902** and **903.** The CBs are multiplexed sequentially onto the Resource Elements (REs). This cause the length in time of a single CB to be reduced, as it now only occupies four symbols instead of the 12 available in a subframe, disregarding the control subframes. It is easier to recover data if it spans a long duration, since the percentage of coverage by the Multi-SIM gap is relative smaller compared with the total duration. The scenario seen in FIG **9** often occurs with a high MCS, causing a low robustness of the signal, hence it is even more unlikely that the data is recovered during a Multi-SIM gap.

FIG. **10** is a schematic diagram illustrating data distribution for a low MCS data channel with one CBs being carried by one RB. If the amount of available RBs were reduced, the RLC PDU length must also be reduced, and the amount of CBs should also be reduced. This scenario is shown in FIG 10 in which only a single CB it fitting in the complete TTI. This scenario seen may be achieved combining the MCS selection with the RE allocation procedure and the PDU split procedure. Aligning in this way the scheduler and the MCS selector.

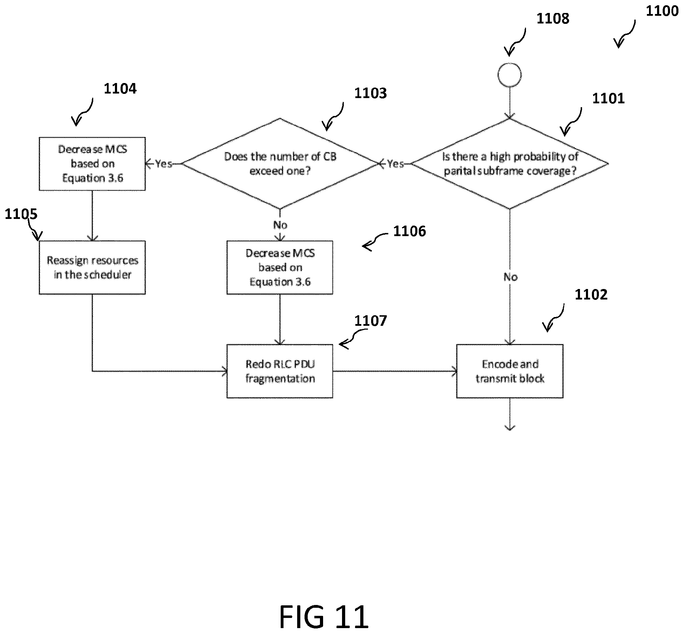

FIG. **11** illustrates a flowchart of a process combining RLC PDU partitioning, with the scheduling and AMC selection. The process **1100** first calculates the probability of partial subframe Multi-SIM gap coverage **1108** using the previous and current loss probability $P_{NACK}(k)$. If the probability for partial coverage is low, that is lower than a given threshold **1101,** the process does not invoke, and the data is transmitted as within a single SIM UE **1102.** If the probability for partial coverage is high, that is higher than a given threshold **1101,** the process checks whether the amount of CBs per TB is greater than one **1103.** If this is not the case **1106,** the MCS is decreased in order to increase signal robustness. Decreasing the MCS would cause the available resources for data to be decreased, hence the PDU segmentation must be recalculated in RLC **1107.** In the case where the number of CBs exceeds one **1103,** the MCS is decreased **1104** in order to let the scheduler reassign the amount of RBs to the UE. Again, after rescheduling **1105,** the PDU segmentation is reassigned within RLC **1107** before the data is encoded and transmitted as usual **1102.**

The process of combining RLC PDU partitioning, with the scheduling and AMC selection process serves the advantage of increasing the probability that data partially covered by Multi-SIM gaps is received. Furthermore, as the amount of resources assigned to Multi-SIM UEs is limited to only what is required. Hereby, the utilization of the BS resources is optimized

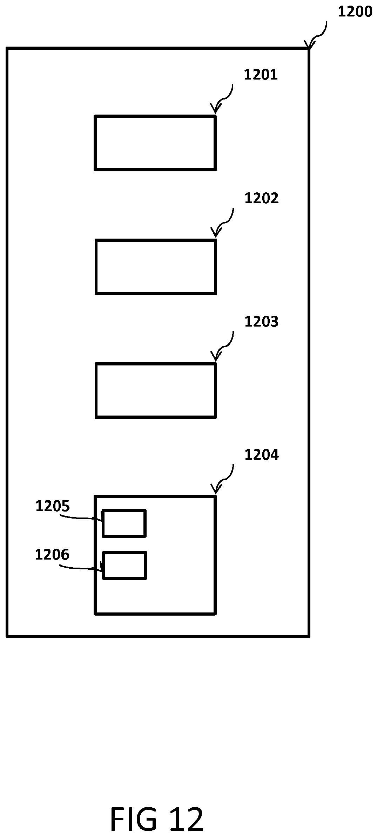

FIG. **12** shows an exemplary mobile radio communication device **1200** that may be, for example, a node of a mobile communication network and, for example, a base station for a Long Term Evolution (LTE) radio access technology, or for a Universal Mobile Telecommunication System (UMTS) radio access technology, or for a Global System for Mobile Communications (GSM) radio access technology.

The network node **1200** may include a determination circuit **1202** which may be configured to determine an information indicating a probability metric for a subframe of a frame, the frame being part of a signal transmitted between the node and a mobile terminal device, wherein the probability metric for the subframe indicates a probability that the subframe is lost during the transmission.

The network node **1200** may further include a comparing circuit **1203,** which may be configured to compare the values of the probability metric with a predetermined threshold value.

The network node **1200** may further include a controller **1204,** which may be configured to execute one or more actions based on the comparison result.

The network node **1200** may include other components, such as a database **1201** for storing information.

The controller **1204** may further include a rescheduling module **1205** which may be configured to dynamically assign resources to the mobile terminal device taking account of the determined probability metric. By way of example, the controller **1204** may be configured to reschedule a downlink transmission of the network node **1200** to the SIM in the active mode of the mobile terminal device. The rescheduling module **1205** may be resided in the medium access control (MAC) layer and configured to reschedule the timing of transmitting downlink packets to the first SIM in the RRC active mode.

A transport format is shared between the physical layer and the MAC layer for enabling transmission of packets. For example, in LTE context, the transport format defines the kind of data and how much data is sent on each transport channel in each transport time interval (TTI). The transport format includes, among others, a redundancy version which specifies the amount of data to be sent.

The controller **1204** may further include a format selecting module **1206** which may be configured to select a transport format which determines the kind of data and amount of data to be sent to the mobile radio communication terminal.

The format selecting module **1206** may be configured to allocate the data in transport blocks, segment the transport blocks into a plurality of code blocks, and allocate the code blocks into one or more resource blocks.

The format selecting module **1206** may be further configured to reduce the number of code blocks allocated in each of the one or more resource blocks for values of the probability metric above the predetermined threshold value and to increase the number of code blocks allocated in each of the one or more resource blocks for values of the probability metric below the predetermined threshold value.

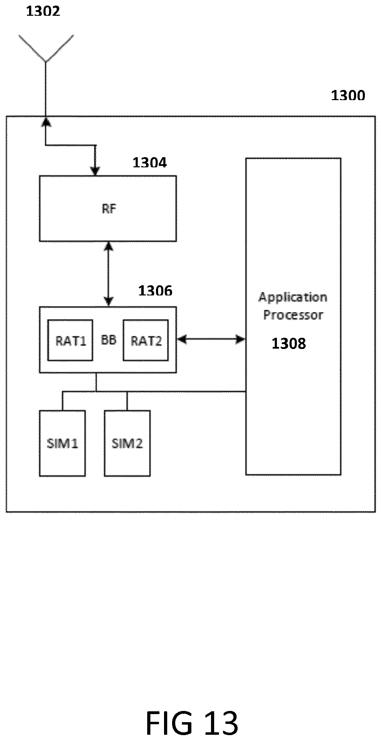

FIG. **13** shows a block diagram illustrating an internal configuration of mobile terminal **1300** according to an aspect of the disclosure. As will be detailed, mobile terminal **1300** may be a device capable of supporting multiple radio connections, such as a multi-SIM device or another mobile device that supports multiple radio access technologies. Mobile terminal device **1300** may be configured to schedule certain reception operations for a second radio connection based on the probable transmission and retransmission times of data blocks for a first radio connection. Mobile terminal **1300** may attempt to ensure that multiple transmissions (including retransmissions) of the same data block are avoided.

As illustrated in FIG. **13,** mobile terminal **1300** may include antenna **1302,** radio frequency (RF) transceiver **1304,** baseband system **1306,** application processor **1308, SIM1,** and **SIM2.** As shown in in FIG. **13,** the aforementioned components of mobile terminal **1300** may be implemented as separate components. However, it is appreciated that the architecture of mobile terminal **1300** depicted in FIG. **13** is for purposes of explanation, and accordingly one or more of the aforementioned components (or additional components not explicitly shown in FIG. **13**) of mobile terminal **200** may be integrated into a single equivalent component or divided into two separate components with collective equivalence. It is understood that mobile terminal **1300** may have one or more additional components, such as additional hardware, software, or firmware elements. For example, mobile terminal **1300** may further include various additional components including processors/microprocessors, controllers/microcontrollers, memory, other specialty or generic hardware/processors/circuits, etc., in order to support a variety of additional operations. Mobile terminal **1300** may also include a variety of user input/output devices (display(s), keypad(s), touchscreen(s), speaker(s), external button(s), camera(s), microphone(s), etc.), peripheral device(s), memory, power supply, external device interface(s), subscriber identify module(s) (SIM) etc.

It is appreciated that the aforementioned components of mobile terminal **1300,** for example, RF transceiver **1304,** baseband system **1306,** and application processor **1308** may be implemented in a number of different manners, such as by hardware, firmware, software executed on hardware (e.g. a processor), or any combination thereof. Various options include analog circuit(s), digital circuit(s), logic circuit(s), processor(s), microprocessor(s), controller(s), microcontroller(s), scalar processor(s), vector processor(s), Central Processing Unit(s) (CPU), Graphics Processing Unit(s) (GPU), Digital Signal Processor(s) (DSP), Field Programmable Gate Array(s) (FPGA), integrated circuit(s), or Application Specific Integrated Circuit(s) (ASIC).

As will be detailed, in an aspect of the disclosure mobile terminal **1300** may include a radio processing circuit (RF transceiver **1304**) configured to receive and process radio frequency signals; and one or more baseband modems (baseband system **206**) which may be configured to determine a probability metric for a subframe of a frame, the frame being part of a signal transmitted between a node of a mobile communication network and the mobile terminal device **1300,** wherein the probability metric for the subframe indicates a probability that the subframe is lost during the transmission..

In an abridged overview of the operation of mobile terminal **1300,** mobile terminal 1300 may be configured to receive and/or transmit wireless signals according to multiple different wireless access protocols or radio access technologies (RATs), including any one of, or any combination of, LTE (Long Term Evolution), WLAN (wireless local area network), WiFi, UMTS (Universal Mobile Telecommunications System), GSM (Global System for Mobile Communications), Bluetooth, CDMA (Code Division Multiple Access), Wideband CDMA (W-CDMA), etc. The specific RAT capabilities of mobile terminal a**1300** may be dependent on the RAT capabilities of **SIM1** (e.g. as a first radio connection of mobile terminal **1300**), **SIM2** (e.g. as a second radio connection of mobile terminal **1300**), and baseband system **1306.**

Further to the abridged overview of operation of mobile terminal **1300,** RF transceiver **1304** may receive radio frequency wireless signals via antenna **1302,** which may be implemented as e.g. a single antenna or an antenna array composed of multiple antennas. RF transceiver **1304** may include various reception circuitry elements, which may include e.g. analog circuitry, configured to process externally received signals, such as mixing circuity to convert externally received RF signals to baseband and/or intermediate frequencies. RF transceiver **1304** may also include amplification circuitry to amplify externally received signals, such as power amplifiers (PAs) and/or Low Noise Amplifiers (LNAs), although it is appreciated that such components may also be implemented separately. RF transceiver **1304** may additionally include various transmission circuitry elements configured to transmit internally received signals, such as e.g. baseband and/or intermediate frequency signals provided by baseband system **1306,** which may include mixing circuitry to modulate internally received signals onto one or more radio frequency carrier waves and/or amplification circuitry to amplify internally received signals before transmission. RF transceiver **1304** may provide such signals to antenna **1302** for wireless transmission. RF transceiver **1304** may be structurally configured according to various different transceiver architectures dependent on the intended capabilities of mobile terminal **1300.** For example, RF transceiver **1304** may include a single receiver subsystem and single transmitter subsystem, e.g. for a DSDS multi-SIM design. Alternatively, RF transceiver **1304** may include two receiver subsystems and a single transmitter subsystem, e.g. for a DR-DSDS multi-SIM design. Alternatively, RF transceiver **1304** may include two receiver subsystems and two transmitter subsystems, e.g. for a DSDS multi-SIM design.

Further references herein to reception and/or transmission of wireless signals by mobile terminal **1300** may thus be understood as an interaction between antenna **1302,** RF transceiver **1304,** and baseband system **1306** as detailed above. Although not explicitly depicted in FIG. **13,** RF transceiver **1304** may be additionally connected to application processor **1308.**

Baseband system **1306** may include RAT system **RAT1** and RAT system **RAT2,** which may each be configured to support at least one radio connection each, where each radio connection may be for the same or different radio access technologies. In a multi-SIM context, **RAT1** and **RAT** may be respectively allocated to **SIM1** and **SIM2** in accordance with a multi-SIM design

While the above description may focus on certain radio access technologies and radio connectivity states, it is appreciated that the detailed aspects of this disclosure are considered demonstrative in nature, and accordingly may be applied to other mobile devices that support multiple radio connections with the same or different radio access technologies, numbers of SIMs, and/or radio connectivity states. Furthermore, the implementations detailed herein may apply to conflicts for any type of radio activity for multiple radio connections, and thus may not be limited to the aforementioned "free" and "locked" operations explicitly detailed herein.

It is appreciated that the terms "user equipment", "UE", "mobile terminal", mobile device, etc., may apply to any wireless communication device, including cellular phones, tablets, laptops, personal computers, and any number of additional electronic devices.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include a one or more components configured to perform each aspect of the related method.

The following Examples pertain to further aspects of this disclosure:

Example 1 is a scheduling method for communicating with a mobile terminal device by a network. The method may include determining a probability metric for a portion of transmission in time, the portion being part of a signal transmitted between a node of a mobile communication network and a mobile terminal device. The probability metric for the portion indicates a probability that the portion is lost during the transmission. The method may further include assigning resources to the mobile terminal device based on the determined probability metric.

In Example 2, the subject matter of Example 1 can optionally include that determining a probability metric includes determining a probability metric for a subframe of a frame, the frame being part of a signal transmitted between a node of a mobile communication network and a mobile terminal device. The probability metric for the subframe indicates a probability that the subframe is lost during the transmission.

In Example 3, the subject matter of any one of Examples 1 or 2 can optionally include that the mobile terminal device is configured to allow a first radio connection and a second radio connection.

In Example 4, the subject matter of Example 3 can optionally include that the first radio connection is an active radio connection and the second radio connection is in an idle radio connection.

In Example 5, the subject matter of Example 4 can optionally include that determining a probability metric for a portion of transmission in time further includes monitoring retransmissions for the active radio connection during an observation time period, and calculating the probability metric for one or more additional portions of transmission in time of the active radio connection based on the monitored retransmissions.

In Example 6, the subject matter of any one of Examples 3 to 5 can optionally include that the first radio connection is a radio connection of a first SIM of the mobile terminal device and the second radio connection is a radio connection of a second SIM of the mobile terminal device.

In Example 7, the subject matter of any one of Examples 3 to 6 can optionally include that the first radio connection and the second radio connection are connected to different Cellular Wide Area radio communication networks.

In Example 8, the subject matter of any one of Examples 3 to 7 can optionally include that the mobile terminal device is a multi-SIM device configured according to a Dual-SIM Dual-Standby (DSDS) design, and that the first radio connection is a radio connection of a first SIM of the mobile terminal device and the second radio connection is a radio connection of a second SIM of the mobile terminal device.

In Example 9, the subject matter of any one of Examples 3 to 8 can optionally include that the node of a mobile communication network is a base station of a Long Term Evolution (LTE) radio access technology, or a base station of a Universal Mobile Telecommunication System (UMTS) radio access technology, or a base station of a Global System for Mobile Communications (GSM) radio access technology.

Example 10 is a scheduling method for communicating with a plurality of mobile terminal devices, including a first mobile terminal device and a second mobile terminal device. The method is performed by a base station node. The method may include determining a probability metric for a portion of transmission in time, the portion being part of a signal transmitted between the node and the first mobile terminal device. The probability metric for the portion indicates a probability that the portion is lost during the transmission. The method may further include determining a first priority metric for the first mobile terminal device and a second priority metric for the second mobile terminal device. The first priority metric is based on the determined probability metric. The method may further include assigning resources to the first mobile terminal device or to the second mobile terminal device based on the first and the second priority metric.

In Example 11, the subject matter of Example 10 can optionally include that the portion of transmission in time is a subframe of a frame.

In Example 12, the subject matter of any one of Examples 10 or 11 can optionally include that assigning resources to the first or to the second mobile terminal further includes assigning resources to the mobile terminal device to the first mobile terminal device or the second mobile terminal device having the higher priority metric.

In Example 13, the subject matter of Example 12 can optionally include that determining a first priority metric for the first mobile terminal device and a second priority metric for the second mobile terminal device. The first priority metric is based on the determined probability metric. The method may further include reducing the first priority metric for values of the determined probability metric below a predetermined threshold.

In Example 14, the subject matter of any one of Examples 10 to 13 can optionally include that the first mobile terminal device is configured to allow a first radio connection and a second radio connection.

In Example 15, the subject matter of Example 14 can optionally include that the first radio connection is an active radio connection and the second radio connection is in an idle radio connection.

In Example 16, the subject matter of Example 15 can optionally include that determining a probability metric for a subframe of a frame further includes monitoring retransmissions for the active radio connection during an observation time period, and calculating the probability metric for one or more additional portions of transmission in time of the active radio connection based on the monitored retransmissions.

In Example 17, the subject matter of any one of Examples 14 to 16 can optionally include that the first radio connection is a radio connection of a first SIM of the first mobile terminal device and the second radio connection is a radio connection of a second SIM of the first mobile terminal device.

In Example 18, the subject matter of any one of Examples 14 to 17 can optionally include that the first radio connection and the second radio connection are connected to different Cellular Wide Area radio communication networks.

In Example 19, the subject matter of any one of Examples 14 to 18 can optionally include that the first mobile terminal device is a multi-SIM device configured according to a Dual-SIM Dual-Standby (DSDS) design, and that the first radio connection is a radio connection of a first SIM of the first mobile terminal device and the second radio connection is a radio connection of a second SIM of the first mobile terminal device.

In Example 20, the subject matter of any one of Examples 14 to 19 can optionally include that the node of the mobile communication network is a base station of a Long Term Evolution (LTE) radio access technology, or a base station of a Universal Mobile Telecommunication System (UMTS) radio access technology, or a base station of a Global System for Mobile Communications (GSM) radio access technology.

Example 21 is a modulation method for communicating with a mobile terminal device. The method is performed by a network. The method may include determining a probability metric for a portion of transmission in time, the portion being part of a signal transmitted between a node of the network and the mobile terminal device. The probability metric for the portion indicates a probability that the portion is lost during the transmission. The method may further include selecting a modulation scheme for the transmission of the signal by the network based on the determined probability metric.

In Example 22, the subject matter of Example 21 can optionally include that the portion of transmission in time is a subframe of a frame.

In Example 23, the subject matter of any one of Examples 20 or 21 can optionally include that selecting a modulation scheme for the transmission of the signal includes reducing the modulation order of the modulation scheme for values of the probability metric above a predetermined threshold value.

In Example 24, the subject matter of Example 23 can optionally include that selecting a modulation scheme for the transmission of the signal includes selecting a Quadrature Phase Shift Keying (QPSK) modulation scheme for values of the probability metric above the predetermined threshold value.

In Example 25, the subject matter of any one of Examples 21 to 24 can optionally include that selecting a modulation scheme for the transmission of the signal comprises increasing the modulation order of the modulation scheme for values of the probability metric increasing below a predetermined threshold value.

In Example 26, the subject matter of any one of Examples 21 to 25 can optionally include that selecting a modulation scheme for the transmission of the signal includes selecting a 64 Quadrature amplitude modulation (64QAM) modulation scheme for values of the probability metric below the predetermined threshold value.

In Example 27, the subject matter of any one of Examples 21 to 26 can optionally include that the mobile terminal device is configured to allow a first radio connection and a second radio connection.

In Example 28, the subject matter of Example 27 can optionally include that the first radio connection is an active radio connection and the second radio connection is in an idle radio connection.

In Example 29, the subject matter of Example 28 can optionally include that determining a probability metric for a portion of transmission in time further includes monitoring retransmissions for the active radio connection during an observation time period, and calculating the probability metric for one or more additional portions of transmission in time of the active radio connection based on the monitored retransmissions.

In Example 30, the subject matter of any one of Examples 27 to 29 can optionally include that the first radio connection is a radio connection of a first SIM of the mobile terminal device and the second radio connection is a radio connection of a second SIM of the mobile terminal device.

In Example 31, the subject matter of any one of Examples 27 to 30 can optionally include that the first radio connection and the second radio connection are connected to different Cellular Wide Area radio communication networks.

In Example 32, the subject matter of any one of Examples 27 to 31 can optionally include that the mobile terminal device is a multi-SIM device configured according to a Dual-SIM Dual-Standby (DSDS) design, and that the first radio connection is a radio connection of a first SIM of the mobile terminal device and the second radio connection is a radio connection of a second SIM of the mobile terminal device.

In Example 33, the subject matter of any one of Examples 27 to 32 can optionally include that the node of a mobile communication network is a base station for a Long Term Evolution (LTE) radio access technology, or a base station for a Universal Mobile Telecommunication System (UMTS) radio access technology, or a base station for a Global System for Mobile Communications (GSM) radio access technology.

Example 34 is a coding method. The method is performed by a node of a mobile communication network. The method may include determining a probability metric for a portion of transmission in time, the portion being part of a signal transmitted between the node and a mobile terminal device. The probability metric for the portion indicates a probability that the subframe is lost during the transmission. The method may further include selecting a coding scheme for the transmission of the signal based on the determined probability metric.

In Example 35, the subject matter of Example 34 can optionally include that the portion of transmission in time is a subframe of a frame.

In Example 36, the subject matter of any one of Examples 34 or 35 can optionally include that selecting a coding scheme for the transmission of the signal includes reducing the coding rate of the coding scheme for values of the probability metric above a predetermined threshold value.

In Example 37, the subject matter of any one of Examples 34 to 36 can optionally include that selecting a coding scheme for the transmission of the signal comprises increasing the coding rate of the coding scheme for values of the probability metric below a predetermined threshold value.

In Example 38, the subject matter of any one of Examples 34 to 37 can optionally include that the mobile terminal device is configured to allow a first radio connection and a second radio connection.

In Example 39, the subject matter of Example 38 can optionally include that the first radio connection is an active radio connection and the second radio connection is in an idle radio connection.

In Example 40, the subject matter of Example 39 can optionally include that determining a probability metric for a portion of transmission in time further includes monitoring retransmissions for the active radio connection during an observation time period, and calculating the probability metric for one or more additional portions of transmission in time of the active radio connection based on the monitored retransmissions.

In Example 41, the subject matter of any one of Examples 31 to 40 can optionally include that the first radio connection is a radio connection of a first SIM of the mobile terminal device and the second radio connection is a radio connection of a second SIM of the mobile terminal device.

In Example 42, the subject matter of any one of Examples 38 to 41 can optionally include that the first radio connection and the second radio connection are connected to different Cellular Wide Area radio communication networks.

In Example 43, the subject matter of any one of Examples 31 to 42 can optionally include that the mobile terminal device is a multi-SIM device configured according to a Dual-SIM Dual-Standby (DSDS) design, and wherein the first radio connection is a radio connection of a first SIM of the mobile terminal device and the second radio connection is a radio connection of a second SIM of the mobile terminal device.

In Example 44, the subject matter of any one of Examples 31 to 43 can optionally include that the node of a mobile communication network is a base station for a Long Term Evolution (LTE) radio access technology, or a base station for a Universal Mobile Telecommunication System (UMTS) radio access technology, or a base station for a Global System for Mobile Communications (GSM) radio access technology.

Example 45 is a data allocation method for a mobile communication network. The method is performed by a node of the mobile communication network. The method may include determining a probability metric for a portion of transmission in time, the portion being part of a signal transmitted between the node and a mobile terminal device. The probability metric for the portion indicates a probability that the subframe is lost during the transmission. The method may further include determining the allocation of data to be transmitted between the node and the communication device within a given time slot based on the determined probability metric.

In Example 46, the subject matter of Example 45 can optionally include that the portion of transmission in time is a subframe of a frame.

In Example 47, the subject matter of any one of Examples 45 or 46 can optionally include that determining the allocation of the data to be transmitted between the node of the mobile communication network and the communication device further includes: allocating the data in transport blocks; segmenting the transport blocks into a plurality of code blocks; and allocating the code blocks into one or more resource blocks.

In Example 48, the subject matter of Example 47 can optionally include that allocating the code blocks into one or more resource blocks further comprises reducing the number of code blocks allocated in each of the one or more resource blocks for values of the probability metric above a predetermined threshold value.

In Example 49, the subject matter of any one of Examples 47 or 48 can optionally include that allocating the code blocks into one or more resource blocks further includes increasing the number of code blocks allocated in each of the one or more resource blocks for values of the probability metric below a predetermined threshold value.

In Example 50, the subject matter of any one of Examples 45 to 49 can optionally include that the mobile terminal device is configured to allow a first radio connection and a second radio connection.

In Example 51, the subject matter of Example 50 can optionally include that the first radio connection is an active radio connection and the second radio connection is in an idle radio connection.

In Example 52, the subject matter of Example 51 can optionally include that determining a probability metric for a portion of transmission in time further includes monitoring retransmissions for the active radio connection during an observation time period, and calculating the probability metric for one or more additional portions of transmission in time of the active radio connection based on the monitored retransmissions.

In Example 53, the subject matter of any one of Examples 51 or 52 can optionally include that the first radio connection is a radio connection of a first SIM of the mobile terminal device and the second radio connection is a radio connection of a second SIM of the mobile terminal device.

In Example 54, the subject matter of any one of Examples 51 to 53 can optionally include that the first radio connection and the second radio connection are connected to different Cellular Wide Area radio communication networks.

In Example 55, the subject matter of any one of Examples 51 to 54 can optionally include that the mobile terminal device is a multi-SIM device configured according to a Dual-SIM Dual-Standby (DSDS) design, and that the first radio connection is a radio connection of a first SIM of the mobile terminal device and the second radio connection is a radio connection of a second SIM of the mobile terminal device.

In Example 56, the subject matter of any one of Examples 51 to 55 can optionally include that the node of a mobile communication network is a base station for a Long Term Evolution (LTE) radio access technology, or a base station for a Universal Mobile Telecommunication System (UMTS) radio access technology, or a base station for a Global System for Mobile Communications (GSM) radio access technology.

Example 57 is a node of a mobile communication network. The node may include a determination circuit configured to determine an information indicating a probability metric for a portion of transmission in time, the portion being part of a signal transmitted between the node and a mobile terminal device. The probability metric for the portion indicates a probability that the portion is lost during the transmission. The node may further include a comparing circuit configured to compare the values of the probability metric with a predetermined threshold value, and a controller configured to execute one or more actions based on the comparison result.

In Example 58, the subject matter of Example 57 can optionally include that the portion of transmission in time is a subframe of a frame.

In Example 59, the subject matter of any one of Examples 57 or 58 can optionally include that the mobile terminal device is configured to allow a first radio connection and a second radio connection.

In Example 60, the subject matter of Example 59 can optionally include that the first radio connection is an active radio connection and the second radio connection is in an idle radio connection.

In Example 61, the subject matter of any one of Examples 59 or 60 can optionally include that the first radio connection is a radio connection of a first SIM of the mobile terminal device and the second radio connection is a radio connection of a second SIM of the mobile terminal device.

In Example 62, the subject matter of any one of Examples 59 to 61 can optionally include that the first radio connection and the second radio connection are connected to different Cellular Wide Area radio communication networks.

In Example 63, the subject matter of any one of Examples 59 to 62 can optionally include that the mobile terminal device is a multi-SIM device configured according to a Dual-SIM Dual-Standby (DSDS) design, and that the first radio connection is a radio connection of a first SIM of the mobile terminal device and the second radio connection is a radio connection of a second SIM of the mobile terminal device.

In Example 64, the subject matter of any one of Examples 59 to 63 can optionally include that the node is a base station for a Long Term Evolution (LTE) radio access technology, or a base station for a Universal Mobile Telecommunication System (UMTS) radio access technology, or a base station for a Global System for Mobile Communications (GSM) radio access technology.

In Example 65, the subject matter of any one of Examples 57 to 64 can optionally include that the controller is further configured to assign resources to the mobile terminal device taking account of the determined probability metric.

In Example 66, the subject matter of any one of Examples 57 to 65 can optionally include that the controller is further configured to select a modulation scheme for the transmission of the signal taking account of the determined probability metric.

In Example 67, the subject matter of Example 66 can optionally include that the controller is further configured to reduce the modulation order of the modulation scheme for values of the probability metric above the predetermined threshold value.

In Example 68, the subject matter of Example 67 can optionally include that the controller is further configured to select a Quadrature Phase Shift Keying (QPSK) modulation scheme for values of the probability metric above the predetermined threshold value.

In Example 69, the subject matter of any one of Examples 66 to 68 can optionally include that the controller is further configured to increase the modulation order of the modulation scheme for values of the probability metric increasing below the predetermined threshold value.

In Example 70, the subject matter of Example 69 can optionally include that the controller is further configured to select a 64 Quadrature amplitude modulation (64QAM) modulation scheme for values of the probability metric below the predetermined threshold value.

In Example 71, the subject matter of any one of Examples 57 to 70 can optionally include that the controller is further configured to select a coding scheme for the transmission of the signal based on the determined probability metric.

In Example 72, the subject matter of Example 70 can optionally include that the controller is further configured to reduce the coding rate of the coding scheme for values of the probability metric above a predetermined threshold value.

In Example 73, the subject matter of any one of Examples 71 or 72 can optionally include that the controller is further configured to increase the coding rate of the coding scheme for values of the probability metric below a predetermined threshold value.

In Example 74, the subject matter of any one of Examples 57 to 73 can optionally include that the controller is further configured to determine the allocation of data to be transmitted between the node and the communication device within a given time slot taking account of the determined probability metric.

In Example 75, the subject matter of Example 74 can optionally include that the controller is further configured to allocate the data in transport blocks, to segment the transport blocks into a plurality of code blocks, and to allocate the code blocks into one or more resource blocks.

In Example 76, the subject matter of Example 75 can optionally include that the controller is further configured to reduce the number of code blocks allocated in one or more resource blocks for values of the probability metric above the predetermined threshold value.

In Example 77, the subject matter of any one of Examples 75 or 76 can optionally include that the controller is further configured to increase the number of code blocks allocated in one or more resource blocks for values of the probability metric below the predetermined threshold value.

Example 78 is a mobile terminal device. The mobile terminal device may include a radio processing circuit configured to receive and process radio frequency signals, and one or more baseband modems configured to determine a probability metric for a portion of transmission in time, the portion being part of a signal transmitted between a node of a mobile communication network and the mobile terminal device. The probability metric for the subframe indicates a probability that the subframe is lost during the transmission.

In Example 79, the subject matter of Example 78 can optionally include that the portion of transmission in time is a subframe of a frame.

In Example 80, the subject matter of any one of Examples 78 or 79 can optionally include that the mobile terminal device is configured to allow a first radio connection and a second radio connection.

In Example 81, the subject matter of Example 80 can optionally include that the first radio connection is an active radio connection and the second radio connection is in an idle radio connection.

In Example 82, the subject matter of any one of Examples 80 or 81 can optionally include that the first radio connection is a radio connection of a first SIM of the mobile terminal device and the second radio connection is a radio connection of a second SIM of the mobile terminal device.

In Example 83, the subject matter of any one of Examples 80 to 82 can optionally include that the first radio connection and the second radio connection are connected to different Cellular Wide Area radio communication networks.

In Example 84, the subject matter of any one of Examples 80 to 83 can optionally include that the mobile terminal device is a multi-SIM device configured according to a Dual-SIM Dual-Standby (DSDS) design, and that the first radio connection is a radio connection of a first SIM of the mobile terminal device and the second radio connection is a radio connection of a second SIM of the mobile terminal device.

In Example 85, the subject matter of any one of Examples 78 to 84 can optionally include that the node is a base station for a Long Term Evolution (LTE) radio access technology, or a base station for a Universal Mobile Telecommunication System (UMTS) radio access technology, or a base station for a Global System for Mobile Communications (GSM) radio access technology.

**Claims**

1. A scheduling method for communicating with a mobile terminal device by a network, the method comprising:

   determining a probability metric for a portion of a transmission, the portion being part of a signal transmitted between a node of a mobile communication network and a mobile terminal device, wherein the probability metric for the portion indicates a probability that the portion is lost during the transmission(1101);
   evaluating the probability metric for satisfaction of a predetermined threshold, and if the probability metric satisfies the predetermined threshold, determining a number of code blocks allocated to a resource block for the mobile terminal device and decreasing a modulation coding scheme level (1103); and
   if the determined number of code blocks is greater than one (1104), reassigning resources to the mobile terminal device according to the decreased modulation coding scheme level(1105).

2. The scheduling method of claim 1, wherein determining a probability metric comprises determining a probability metric for a subframe of a frame, the frame being part of a signal transmitted between a node of a mobile communication network and a mobile terminal device, wherein the probability metric for the subframe indicates a probability that the subframe is lost during the transmission.

3. The scheduling method of any one of claims 1 or 2, wherein the mobile terminal device is configured to allow a first radio connection and a second radio connection.

4. The scheduling method of claim 3, wherein the first radio connection is an active radio connection and the second radio connection is in an idle radio connection.

5. The scheduling method of claim 4, wherein determining a probability metric for a portion of transmission in time further includes monitoring retransmissions for the active radio connection during an observation time period, and calculating the probability metric for one or more additional portions of transmission in time of the active radio connection based on the monitored retransmissions.

6. The scheduling method of any one of claims 3 to 5, wherein the first radio connection is a radio connection of a first SIM of the mobile terminal device and the second radio connection is a radio connection of a second SIM of the mobile terminal device.

7. The scheduling method of any one of claims 3 to 6, wherein the first radio connection and the second radio connection are connected to different Cellular Wide Area radio communication networks.

8. A node of a mobile communication network, the node comprising

a determination circuit (1202) configured to determine an information indicating a probability metric for a portion of a transmission, the portion being part of a signal transmitted between the node (1200) and a mobile terminal device, wherein the probability metric for the portion indicates a probability that the portion is lost during the transmission; and to determine a number of code blocks allocated to a resource block for the mobile

a comparing circuit (1203) configured to compare the values of the probability metric with a predetermined threshold value; and

a controller (1204) configured to decrease a modulation coding scheme level if the probability metric satisfies the predetermined threshold, and to reassign resources to the mobile terminal device according to the decreased modulation coding scheme level if the determined number of code blocks is greater than one.

9. The node of claim 8, wherein the portion of transmission in time is a sub frame of a frame.

10. The node of any one of claims 8 or 9, wherein the mobile terminal device is configured to allow a first radio connection and a second radio connection.

11. The node of claim 10, wherein the first radio connection is an active radio connection and the second radio connection is in an idle radio connection.

12. The node of any one of claims 10 or 11, wherein the first radio connection is a radio connection of a first SIM of the mobile terminal device and the second radio connection is a radio connection of a second SIM of the mobile terminal device.

13. The node of any one of claims 10 to 12, wherein the first radio connection and the second radio connection are connected to different Cellular Wide Area radio communication networks.

14. The node of any one of claims 8 to 13, wherein the controller is further configured to assign resources to the mobile terminal device based on the determined probability metric.

15. The node of any one of claims 8 to 14, wherein the controller is further configured to select a modulation scheme for the transmission of the signal based on the determined probability metric; and/or
wherein the controller is further configured to select a coding scheme for the transmission of the signal based on the determined probability metric.


**Patentansprüche**

1. Planungsverfahren zur Kommunikation mit einer mobilen Endvorrichtung durch ein Netzwerk, das Verfahren umfassend:

Bestimmung einer Wahrscheinlichkeitsmetrik für einen Abschnitt einer Übertragung, wobei der Abschnitt Teil eines Signals ist, das zwischen einem Knoten eines mobilen Kommunikationsnetzes und einer mobilen Terminalvorrichtung übertragen wird, wobei die Wahrscheinlichkeitsmetrik für den Abschnitt eine Wahrscheinlichkeit anzeigt, dass der Abschnitt während der Übertragung (1101) verloren geht;
Bewertung der Wahrscheinlichkeitsmetrik auf Erfüllung eines vorgegebenen Grenzwerts, und wenn die Wahrscheinlichkeitsmetrik den vorgegebenen Grenzwert erfüllt, Bestimmung einer Anzahl von Codeblocks, die einem Ressourcenblock für die mobile Endvorrichtung zugeordnet sind, und Verringerung eines Modulierungscodierungsplanlevel (1103) ;
und, wenn die bestimmte Anzahl von Codeblocks größer als eins ist (1104), Neuzuordnung von Ressourcen zu der mobilen Endvorrichtung nach dem verringerten Modulierungscodierungsplanlevel (1105) .

2. Planungsverfahren nach Anspruch 1, wobei die Bestimmung einer Wahrscheinlichkeitsmetrik die Bestimmung einer Wahrscheinlichkeitsmetrik für einen Zwischenrahmens eines Rahmens umfasst, wobei der Rahmen Teil eines Signals ist, das zwischen einem Knoten eines mobilen Kommunikationsnetzes und einer mobilen Terminalvorrichtung übertragen wird, wobei die Wahrscheinlichkeitsmetrik für den Zwischenrahmen eine Wahrscheinlichkeit anzeigt, dass der Zwischenrahmen während der Übertragung verloren geht.

3. Planungsverfahren nach einem der Ansprüche 1 oder 2, wobei die mobile Endvorrichtung konfiguriert ist, eine erste Funkverbindung und eine zweite Funkverbindung zu erlauben.

4. Planungsverfahren nach Anspruch 3, wobei die erste Funkverbindung eine aktive Funkverbindung ist und die zweite Funkverbindung eine Funkverbindung im Leerlauf ist.

5. Planungsverfahren nach Anspruch 4, wobei die Bestimmung einer Wahrscheinlichkeitsmetrik für einen Abschnitt der Übertragung in der Zeit ferner die Überwachung von Neuübertragungen auf eine aktive Funkverbindung während eines Beobachtungszeitraums und die Berechnung der Wahrscheinlichkeitsmetrik für einen oder mehrere weitere Abschnitte der Übertragung in der Zeit der aktiven Funkverbindung auf Grundlage der überwachten Neusendungen enthält.

6. Planungsverfahren nach einem der Ansprüche 3 bis 5, wobei die erste Funkverbindung eine Funkverbindung einer ersten SIM der mobilen Endvorrichtung ist und die zweite Funkverbindung eine Funkverbindung einer zweiten SIM der mobilen Endvorrichtung ist.

7. Planungsverfahren nach einem der Ansprüche 3 bis 6, wobei die erste Funkverbindung und die zweite Funkverbindung mit verschiedenen "Cellular Wide Area"-Funkkommunikationsnetzen verbunden sind.

8. Knoten eines mobilen Kommunikationsnetzes, der Knoten umfassend
einen Bestimmungsschaltkreis (1202), konfiguriert zur Bestimmung einer Information, die eine Wahrscheinlichkeitsmetrik für einen Abschnitt einer Übertragung anzeigt, wobei der Abschnitt Teil eines Signals ist, das zwischen dem Knoten (1200) und einer mobilen Endvorrichtung übertragen wird, wobei die Wahrscheinlichkeitsmetrik für den Abschnitt eine Wahrscheinlichkeit anzeigt, dass der Abschnitt während der Übertragung verlorengeht; und zur Bestimmung einer Anzahl von Codeblocks, die einem Ressourcenblock für die mobile Endvorrichtung zugeordnet sind;
einen Vergleichsschaltkreis (1203), konfiguriert zum Vergleichen der Werte der Wahrscheinlichkeitsmetrik mit einem vorgegebenen Grenzwert; und
einen Controller (1204), konfiguriert zum Verringern eines Modulierungscodierungsplanlevels, wenn die Wahrscheinlichkeitsmetrik den vorgegebenen Grenzwert erfüllt, und zur Neuzuordnung von Ressourcen zu der mobilen Endvorrichtung nach dem verringerten Modulierungscodierungsplanlevel, wenn die vorgegebene Anzahl der Codeblocks größer ist als eins.

9. Knoten nach Anspruch 8, wobei der Zeitabschnitt der Übertragung ein Zwischenrahmen eines Rahmens ist.

10. Knoten nach einem der Ansprüche 8 oder 9, wobei die mobile Endvorrichtung konfiguriert ist, eine erste Funkverbindung und eine zweite Funkverbindung zu erlauben.

11. Knoten nach Anspruch 10, wobei die erste Funkverbindung eine aktive Funkverbindung ist und die zweite Funkverbindung eine Funkverbindung im Leerlauf ist.

12. Knoten nach einem der Ansprüche 10 oder 11, wobei die erste Funkverbindung eine Funkverbindung einer ersten SIM der mobilen Endvorrichtung ist und die zweite Funkverbindung eine Funkverbindung einer zweiten SIM der mobilen Endvorrichtung ist.

13. Knoten nach einem der Ansprüche 10 bis 12, wobei die erste Funkverbindung und die zweite Funkverbindung mit verschiedenen "Cellular Wide Area"-Funkkommunikationsnetzen verbunden sind.

14. Knoten nach einem der Ansprüche 8 bis 13, wobei der Controller ferner konfiguriert ist, der mobilen Endvorrichtung Ressourcen basierend auf der bestimmten Wahrscheinlichkeitsmetrik zuzuweisen.

15. Knoten nach einem der Ansprüche 8 bis 14, wobei der Controller ferner konfiguriert ist zur Auswahl eines Modulierungsplans für die Übertragung des Signals basierend auf der bestimmten Wahrscheinlichkeitsmetrik; und/oder wobei der Controller ferner konfiguriert ist zur Auswahl eines Codierungsplans für die Übertragung des Signals basierend auf der bestimmten Wahrscheinlichkeitsmetrik.

**Revendications**

1. Procédé d'ordonnancement pour communiquer avec un dispositif terminal mobile par un réseau,
le procédé comprenant :

la détermination d'une métrique de mesure de probabilité pour une portion d'une transmission, la portion faisant partie d'un signal transmis entre un noeud d'un réseau de communication mobile et un dispositif terminal mobile, dans lequel la métrique de mesure de probabilité pour la portion indique une probabilité que la portion est perdue durant la transmission (1101) ;

l'évaluation de la métrique de mesure de probabilité pour la satisfaction d'un seuil prédéterminé, et si la métrique de mesure de probabilité satisfait le seuil prédéterminé, la détermination d'un certain nombre de blocs de code alloués à un bloc de ressources pour le dispositif terminal mobile, et la diminution d'un niveau de schéma de codage de modulation (1103) ; et

si le nombre déterminé de blocs de code est supérieur à un (1104), la ré-attribution de ressources au dispositif terminal mobile en fonction du niveau de schéma de codage de modulation ayant été diminué (1105) .

2.  Procédé d'ordonnancement de la revendication 1, dans lequel la détermination d'une métrique de mesure de probabilité comprend la détermination d'une métrique de mesure de probabilité pour une sous-trame d'une trame, la trame faisant partie d'un signal transmis entre un noeud d'un réseau de communication mobile et un dispositif terminal mobile, dans lequel la métrique de mesure de probabilité pour la sous-trame indique une probabilité suivant laquelle la sous-trame est perdue durant la transmission.

3.  Procédé d'ordonnancement de l'une quelconque des revendications 1 ou 2, dans lequel le dispositif terminal mobile est configuré pour permettre une première connexion radio et une deuxième connexion radio.

4.  Procédé d'ordonnancement de la revendication 3, dans lequel la première connexion radio est une connexion radio active et la deuxième connexion radio est dans une connexion radio inactive.

5.  Procédé d'ordonnancement de la revendication 4, dans lequel la détermination d'une métrique de mesure de probabilité pour une portion de transmission dans le temps inclut en outre la surveillance de retransmissions pour la connexion radio active durant un laps de temps d'observation, et le calcul de la métrique de mesure de probabilité pour une ou plusieurs portions additionnelles de transmission dans le temps de la connexion radio active sur la base des retransmissions surveillées.

6.  Procédé d'ordonnancement de l'une quelconque des revendications 3 à 5, dans lequel la première connexion radio est une connexion radio d'un premier SIM du dispositif terminal mobile et la deuxième connexion radio est une connexion radio d'un deuxième SIM du dispositif terminal mobile.

7.  Procédé d'ordonnancement de l'une quelconque des revendications 3 à 6, dans lequel la première connexion radio et la deuxième connexion radio sont connectées à différents réseaux de communication radio étendue cellulaire (« Cellular Wide Area »).

8.  Noeud d'un réseau de communication mobile, le noeud comprenant
un circuit de détermination (1202) configuré pour déterminer une information indiquant une métrique de mesure de probabilité pour une portion d'une transmission, la portion faisant partie d'un signal transmis entre le noeud (1200) et un dispositif terminal mobile, dans lequel la métrique de mesure de probabilité indique une probabilité suivant laquelle la portion est perdue durant la transmission ; et pour déterminer un certain nombre de blocs de code alloués à un bloc de ressources pour le dispositif terminal mobile ;
un circuit de comparaison (1203) configuré pour comparer les valeurs de la métrique de mesure de probabilité avec une valeur seuil prédéterminée ; et
un dispositif de commande (1204) configuré pour diminuer un niveau de schéma de codage de modulation si la métrique de mesure de probabilité satisfait le seuil prédéterminé, et pour ré-attribuer des ressources au dispositif terminal mobile en fonction du niveau de schéma de codage de modulation ayant été diminué si le nombre déterminé de blocs de code est supérieur à un.

9.  Noeud de la revendication 8, dans lequel la portion de transmission dans le temps est une sous-trame d'une trame.

10.  Noeud de l'une quelconque des revendications 8 ou 9, dans lequel le dispositif terminal mobile est configuré pour permettre une première connexion radio et une deuxième connexion radio.

11.  Noeud de la revendication 10, dans lequel la première connexion radio est une connexion radio active et la deuxième connexion radio est dans une connexion radio inactive.

**12.** Noeud de l'une quelconque des revendications 10 ou 11, dans lequel la première connexion radio est une connexion radio d'un premier SIM du dispositif terminal mobile et la deuxième connexion radio est une connexion radio d'un deuxième SIM du dispositif terminal mobile.

**13.** Noeud de l'une quelconque des revendications 10 à 12, dans lequel la première connexion radio et la deuxième connexion radio sont connectées à différents réseaux de communication radio étendue cellulaire (« Cellular Wide Area »).

**14.** Noeud de l'une quelconque des revendications 8 à 13, dans lequel le dispositif de commande est configuré en outre pour affecter des ressources au dispositif terminal mobile sur la base de la métrique de mesure de probabilité ayant été déterminée.

**15.** Noeud de l'une quelconque des revendications 8 à 14, dans lequel le dispositif de commande est configuré en outre pour sélectionner un schéma de modulation pour la transmission du signal sur la base de la métrique de mesure de probabilité ayant été déterminée ; et/ou
dans lequel le dispositif de commande est configuré en outre pour sélectionner un schéma de codage pour la transmission du signal sur la base de la métrique de mesure de probabilité ayant été déterminée.

FIG 1

FIG 2

FIG 3

FIG 4

FIG 5

600

$$N_{dp}$$

| $S_1^k$ | $S_1^k$ | $S_1^k$ | ○ | ○ | ○ | ○ | $S_1^k$ |

$\uparrow$    $\uparrow$    $\uparrow$                 $\uparrow$

$P_S^k$    $P_S^k$    $P_S^k$               $P_S^k$

$\uparrow$    $\uparrow$    $\uparrow$                 $\uparrow$

$T_S^k$    $T_S^k$    $T_S^k$               $T_S^k$

| $S_0^k$ | $S_0^k$ | $S_0^k$ | ○ | ○ | ○ | ○ | $S_0^k$ |

$k:$    0      1      2                $N_{dp}$

# FIG 6

700

| 0.11 | 0.09 | 0.12 | 0.30 | 0.70 | 0.89 | 0.87 | 0.68 | 0.30 | 0.87 | 0.71 | 0.50 | 0.30 | 0.45 | 0.80 | 0.35 | 0.20 | 0.27 | 0.73 | 0.40 | 0.5 | 0.27 | 0.12 | 0.10 | 0.11 |

FIG 7

800

801

802

FIG 8

FIG 9

1000

1 ms

RB x

Control

1001

FIG 10

**1108**

**1100**

**1104**

**1103**

**1101**

```
┌─────────────┐
│ Decrease MCS │         ╱╲ Does the number of CB ╲         ╱╲ Is there a high probability of ╲
│  based on    │◄─Yes─── ╲ exceed one?           ╱ ◄─Yes─── ╲ parital subframe coverage?    ╱
│ Equation 3.6 │          ╲╱                                  ╲╱
└─────────────┘
```

**1105**

**1106**

**1102**

No

No

```
┌─────────────┐         ┌─────────────┐
│  Reassign   │         │ Decrease MCS │
│ resources   │         │  based on    │
│in the scheduler│       │ Equation 3.6 │
└─────────────┘         └─────────────┘
```

**1107**

```
┌─────────────┐         ┌─────────────┐
│ Redo RLC PDU │─────────│ Encode and   │
│ fragmentation│         │transmit block│
└─────────────┘         └─────────────┘
```

# FIG 11

FIG 12

**1302**

**1300**

**1304**

RF

**1306**

| RAT1 | BB | RAT2 |

Application
Processor

**1308**

SIM1    SIM2

# FIG 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• EP 3038284 A1, Buthler